(19) Europäisches Patentamt

European Patent Office

Office européen des brevets

(11) **EP 1 558 022 A2**

(12) **EUROPEAN PATENT APPLICATION**

(43) Date of publication:
27.07.2005 Bulletin 2005/30

(51) Int Cl.7: **H04N 1/60**, H04N 1/407

(21) Application number: 05250265.5

(22) Date of filing: 19.01.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **23.01.2004 JP 2004016259**

(71) Applicant: **Konica Minolta Photo Imaging, Inc.**
**Shinjuku-ku, Tokyo 163-0512 (JP)**

(72) Inventors:
• **Minakuti, Jun,**
**Konica Minolta Photo Imaging Inc.**
**Saikai-shi Osaka 590-8551 (JP)**

• **Ito, Tsukasa**
**Hino-shi Tokyo 191-8511 (JP)**
• **Nakajima, Takeshi**
**Hino-shi Topkyo 191-8511 (JP)**
• **Takano, Hiroaki**
**Hino-shi Tokyo 191-8511 (JP)**

(74) Representative: **Nicholls, Michael John**
**J.A. KEMP & CO.**
**14, South Square**
**Gray's Inn**
**London WC1R 5JJ (GB)**

(54) **Image processing apparatus, method and program, image pickup apparatus and image data output method and program**

(57)    The present invention relates to an image processing apparatus, an image processing method and an image processing program for outputting an image obtained raw datum by an image pickup apparatus and for applying an image transform to an inputted scene referred raw datum based on a color appearance model. The image processing apparatus includes an image transform parameter calculating section for determining an image transform parameter of the color appearance model, based on the scene referred raw data or information related to the scene referred raw data, and an image transform section for applying the image transform based on the color appearance model to the scene referred raw datum using the determined image transform parameter.

FIG. 5

Printed by Jouve, 75001 PARIS (FR)

**Description**

**FIELD OF THE INVENTION**

The present invention relates to an image processing apparatus, an image processing method and an image processing program all for outputting an image obtained through photographing by an image pickup apparatus such as a digital camera on an output device such as a monitor or a printer.

**BACKGROUND OF THE INVENTION**

When outputting an image obtained through photographing by an image pickup apparatus such as a digital camera on an output device such as various monitors or a printer, it is necessary to conduct various types of image processing on each stage on the half way, for the output results to look preferable. For example, tone and colors need to be transformed.

As the transform of this kind, there is a transform to be conducted first for correcting characteristics which are peculiar to an output device. For example, when outputting on CRT (Cathode Ray Tube) monitor (which will be called simply a monitor generically, hereafter), a monitor has its peculiar tone characteristics caused by a principle of a device wherein output luminance is proportional to the number of the power of luminance of photographed-scene. On the other hand, an imaging sensor CCD (Charge Coupled Device) used usually for a digital camera outputs image data which are substantially proportional to luminance. Therefore, if data obtained through imaging by CCD are outputted on a monitor as they are, an image becomes one having luminance that is proportional to the number of the power of luminance of a photographed-scene, resulting in characteristics which are not preferable. In the same way, the printer has its own tone characteristics, and a possibility for data obtained through imaging to be outputted to become a preferable image is low. Accordingly, it is necessary to transform tone of image data by adjusting them to tone characteristics of the output device, on the half way to outputting.

The foregoing applies also to colors in the same way, and an output device has its own reproduction primary color determined by coloring material (phosphor for monitor, dye for printer) to be used. Further, an imaging sensor such as CCD has its own spectral characteristics, and when image data obtained through photographing are outputted as they are, a possibility to obtain reproduction of colors which are close to the subject photographed is low. It is therefore necessary for image data to be subjected to color transform in accordance with relationship between spectral characteristics of the imaging sensor and a reproduction primary color of the output device.

Further, transform processing caused by the limitation of reproduction capability of the output device is needed in addition to transform for adjusting to characteristics peculiar to these output devices. The reproduction capability of the output device means tone and a range of reproduction of colors owned by the output device. In many cases, these are narrower, compared with luminance ranges (luminance threshold) of photographed-scene and with colors of a subject. For example, a luminance area of an actual scene to be photographed arrives at an order of several thousands : 1 in the open air, frequently (for example, see page 926 of "Handbook of color science, Second Edition" edited by The Color Science Association of Japan, published from University of Tokyo Press). However, the luminance range which can be reproduced on a monitor display or a printer which is usually seen indoors is on a level of about several hundreds : 1 at the best. Therefore, when outputting information obtained by an image pickup apparatus such as an imaging sensor, luminance needs to be subjected to some kinds of compression. The foregoing applies also to colors in the same way, and for the subject which is more colorful than a color reproduction range obtained by coloring material of the output device, it is necessary to apply processing to compress within a color reproduction range of the output device and to assign them. A color reproduction range (color gamut) of the output device is called a gamut, and this processing to assign to the reproducible color is called a gamut mapping processing (color gamut mapping processing).

With respect to the processing as stated above to adjust to characteristics of the device, it is naturally necessary to change the contents of the processing for each device. There are various devices each having different characteristics in the market, and conducting appropriate processing for various combinations of these devices in various types is called color management, and its arrangement is called a color management system. Recently, color management is supported at the level of an operation system OS; Operation System) of a personal computer, and image processing application software can carry out these transforms by using OS services (for example, see Patent Document 1).

There are two points of view in the color management. One of them is a method wherein an exchange of data conducted between an input device and an output device is carried out by a color space that is defined in advance. Namely, the input device outputs image data wherein characteristics peculiar to the device are transformed into color space, and the output device conducts processing to adjust to characteristics peculiar to the device on the assumption that the data received are their color space, to output.

Another one is a method to prepare a data file called a device profile on which peculiar characteristics of the device are recorded and the data file is read by the color management system to conduct appropriate transform. As the device profile, ICC profile representing a format standardized by ICC (International Color Consortium) is frequently used.

In the case of a digital camera, the former method is frequently used, and a color space standardized based on characteristics of an average monitor called sRGB is used (see Multimedia Systems and Equipment-Colour Measurement and Management-Part 2-1: Colour Management-Default RGB Colour Space-sRGB IEC61966-2-1). Namely, data transformed into sRGB in the digital camera are outputted.

On the monitor, since sRGB is one determined by average characteristics of the monitor, a big error is not caused even when sRGB is outputted. For obtaining more accurate reproduction, ICC profile is used to output data wherein sRGB is transformed into characteristics peculiar to the monitor by an application software. In recent years, there are available many products wherein characteristics peculiar to the monitor are corrected on a hardware basis by adjusting to sRGB color space, and when these monitors are used, no problem is caused even when outputting is carried out without taking any actions.

On the printer, there are many cases to output data transformed by an application software from sRGB by adjusting to printer characteristics, by the use of ICC profile representing a latter method, although there is an occasion where image data received are processed as sRGB by the software on the printer side (printer driver).

As stated above, in the color management in the case of printing images taken by a digital camera, sRGB, namely, average monitor is a standard at present.

When transforming an image to be displayed on a monitor and a print image by the color management system as stated above, only correction of characteristics peculiar to the device is sometimes insufficient, for both images to look alike. The reason for the foregoing is as follows. Since the viewing condition for observing one image is different from that for observing the other image, visual characteristic of a human body is changed. Unless this is corrected, both images do not look alike. The viewing conditions include the contrast between a looked area and a peripheral area and a difference between a white color of monitor display and a light source color for illuminating a print.

In order to correct a difference of human visual characteristics caused by a difference of the viewing condition of this kind, a color appearance model (CAM; Color Appearance Model) is used. The color appearance model is a model with which the "color appearance" under the various viewing conditions can be estimated. Specifically, it is the model wherein the image transform in which the viewing condition serves as an image transform parameter (which is called an appearance parameter) is conducted from a colorimetry value, and a value expressing "color appearance" under the specified viewing condition can be calculated.

CIECAM97s which is recommended by INTERNATIONAL COMMITTEE OF ILLUMINATION (CIE) as a standard model is used frequently for the color appearance model. Furthermore, after an announcement of CIECAM97s, further improvements were made, and CIECAM02 is about to be recommended soon, as a substitute for CIECAM97s.

By using a color management system in which a color appearance model such as CIECAM is incorporated, it is possible to conduct transform that is necessary for images to look alike under different viewing conditions like monitor display and printing.

After passing through the transform stated above, an image taken by a digital camera is subjected to operations such as monitor display and printing, and a color space and sRGB which serve as a standard in the course of the operations have the following problems. Since sRGB is a color space which is adjusted to an average monitor as mentioned above, its color reproduction range is limited to the same range as that of the monitor substantially. However, the color reproduction range for the printer is broader than that of the monitor. For example, an area which cannot be reproduced by sRGB exists in a cyan area of an ink jet printer, and in a yellow area of a silver halide photography printer (for details, for example, see page 444 of "Fine Imageing and Digital Photography" published by Corona Co. edited by Publishing Committee of The Society of Photographic Science and Technology of Japan). Colors in these areas are not used in the present system wherein sRGB is a standard. Though colors belonging to the aforesaid areas exist in a subject to be photographed, these colors are compressed to the color reproduction range of sRGB to become difficult in terms of reproduction, although the printer has capability to reproduce these colors.

Recently, therefore, there has been thought out a technology to output image data correlated not with a color space adjusted to the monitor such as sRGB but with characteristics of an actual photographed-scene from a digital camera. Namely, image data proportional to luminance of actual photographed-scene which have been transformed into the color space defined colorimetrically are outputted from a digital camera. The data of this kind is called scene-referred raw data, or image data by scene-referred color space. AS the scene-referred color space, there are known, for example, RIMM RGB and ERIMM RGB (see page 418 - 426 of Journal of Imaging Science and Technology, Vol. 45 (2001)) or scRGB (IEC Standard 61966-2-2). On the other hand, the image data adjusted to an output device such as a conventional sRGB is called output-referred raw data.

(Patent Document 1) TOKKAI No. 2003-299116

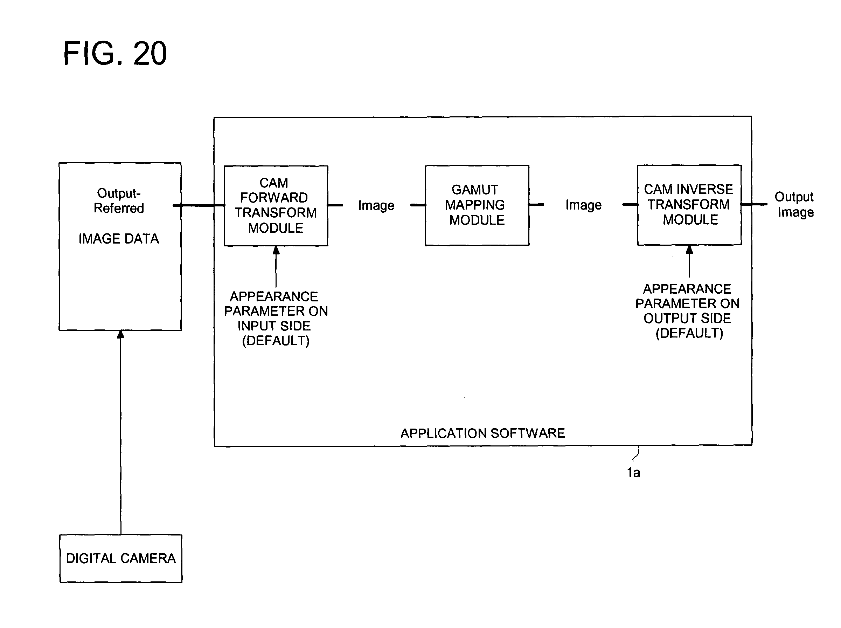

When scene-referred raw data represented by scRGB are outputted from a digital camera, it is necessary for the image data to be transformed by application software into output-referred raw that looks preferable on the output device. For this purpose, an application software corresponding to conventional color management system is used. Conventional application software la shown in Fig. 20 has functions of correction processing for viewing conditions and gamut mapping processing both by a color appearance model.

However, the conventional application software of this kind has a problem that scene-referred raw cannot be transformed into output-referred raw properly.

That is, a difference in human visual characteristics caused by photographed-scene and by a difference of viewing conditions of output image cannot be corrected sufficiently. As stated above already, for correcting such difference of viewing conditions, a color appearance model is used, and in these ordinary color management systems, a color appearance model is used for the purpose of correcting the difference of viewing conditions between a monitor and a printer.

Viewing conditions for the monitor and the printer are usually fixed substantially, and they do not change greatly. Therefore, in the conventional color management system, an appearance parameter is optimized and fixed to the viewing conditions under the ordinary office environment, in many cases. Further, even in the case where a color appearance model is prepared as a standard in OS or the like, viewing conditions cannot be established freely in some cases.

However, viewing conditions in the case of viewing the actual photographed-scene in the course of photographing by a digital camera are greatly different from viewing conditions in the case of viewing the monitor display and prints. For example, absolute luminance for the monitor display is substantially the same as that for prints, but a difference between the outdoor scene in the daytime and the monitor display and prints is extremely large.

Further, scenes to be photographed by a digital camera are multifarious to include bright scenes in the daytime and dark scenes such as night views, and viewing conditions vary greatly depending on photographed-scenes. Even in the case where a viewing condition changes for each image data, the conventional system cannot cope with the changes properly.

When outputting the images taken by a digital camera, there is needed a processing to emphasize contrast and chroma of images for correction of Hunt effect and Stevens effect caused by a difference between photographed-scene and output environment and for viewing flare in the case of observing output. The emphasizing processing of this kind is conducted in the inside of the digital camera at present. An image outputted from the digital camera is sRGB, but it is not a definition of sRGB itself, and it is one which has been subjected to this correction. Therefore, when processing scene-referred raw data with an application software, it is necessary to conduct this emphasizing processing somewhere. However, in the color management system wherein ordinary sRGB is processed, it is impossible to apply the transform, because the transform of this kind is not considered. As a result, it is impossible to transform scene-referred raw data preferably to output them.

Further, there is an occasion wherein an intentional correction is desired in addition to correction caused by a difference of the viewing conditions of this kind. For example, there is the actual that desired tone characteristics vary depending on a subject to be photographed. When an occasion of portrait photographing is compared with an occasion of scenery photographing, for example, an image whose contrast is relatively low is preferred by the portrait photographing. Further, desired tone characteristics vary depending on the ratio of a portrait to a picture area, namely, on an image magnification, and when the ratio of a portrait to a picture area is small, the tone characteristics in which the contrast is high to be close to that of scenery tend to be desired.

Such intentional tone correction processing for discrepancies of subjects has been conducted by internal processing of a digital camera. However, when scene-referred raw data are outputted from a digital camera, the aforementioned processing cannot be conducted, which has been a problem.

## SUMMARY OF THE INVENTION

A problem of the invention is to transform image data which are proportional to luminance of photographed scene so that they may look desirably, and to output them.

To solve the problem, an image processing apparatus according to the present invention determines an image transform parameter of the color appearance model, based on the scene referred raw data or information relates to the scene referred raw data, and applies the image transform (CAM forward transform, CAM inverse transform) based on the color appearance model to the scene referred raw datum using the determined image transform parameter.

## BRIEF DESCRIPTION OF THE DRAWINGS

Fig. 1 is a diagram showing the relationship of connection between an image processing apparatus to which the invention is applied and an outer equipment.

Fig. 2 is a diagram showing the internal structure of a digital camera to which the invention is applied.

Fig. 3 is a diagram illustrating an appearance parameter to be set on CIECAM97s.

Fig. 4 is a flow chart illustrating contents of processing conducted by an appearance model parameter calculating section shown in Fig. 2.

Fig. 5 is a diagram illustrating functions of an application software having an image processing apparatus to which the invention is applied.

Fig. 6 is a flow chart illustrating contents of processing conducted the application software shown in Fig. 5.

Fig. 7 is a flow chart illustrating contents of processing conducted by photographing data analysis module shown in Fig. 5.

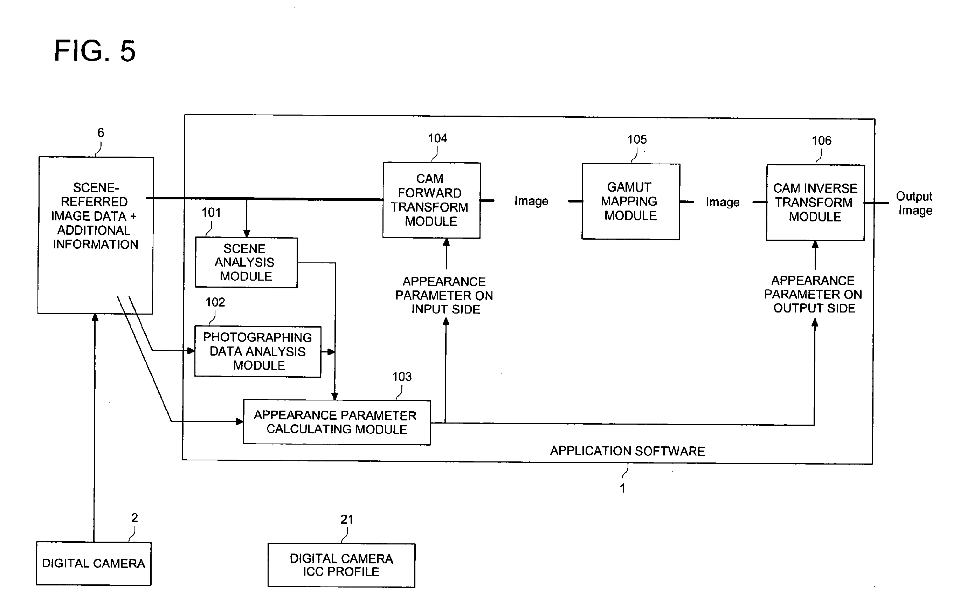

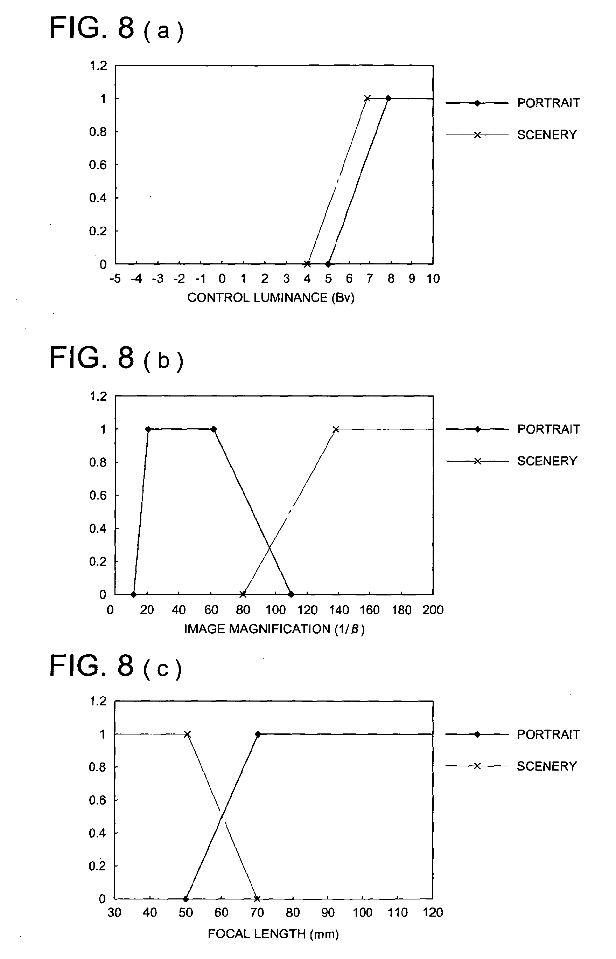

Each of Figs. 8 (a) - 8 (c) is a diagram showing a membership function used by photographing data analysis module shown in Fig. 5.

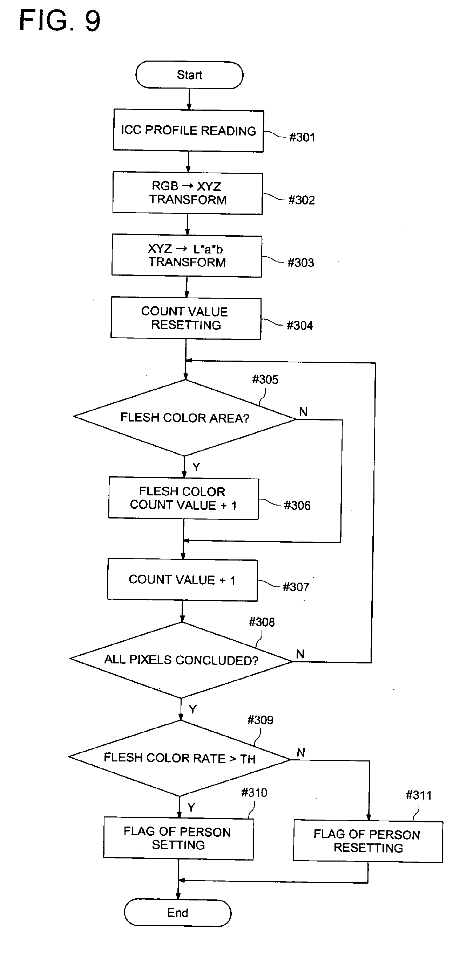

Fig. 9 is a flow chart illustrating contents of processing conducted by a scene analysis module shown in Fig. 5.

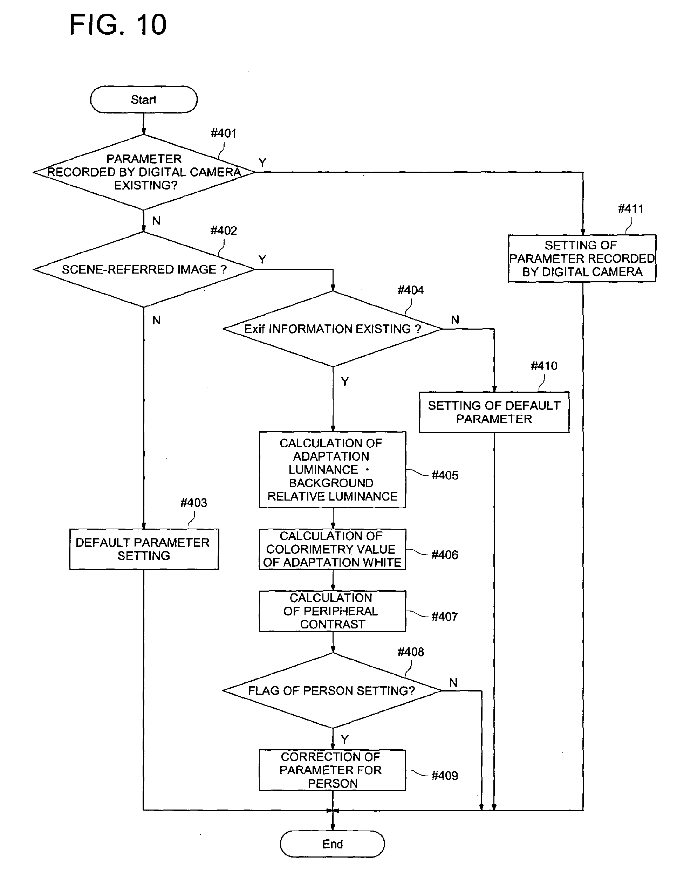

Fig. 10 is a flow chart illustrating contents of processing conducted by an appearance parameter calculating module shown in Fig. 5.

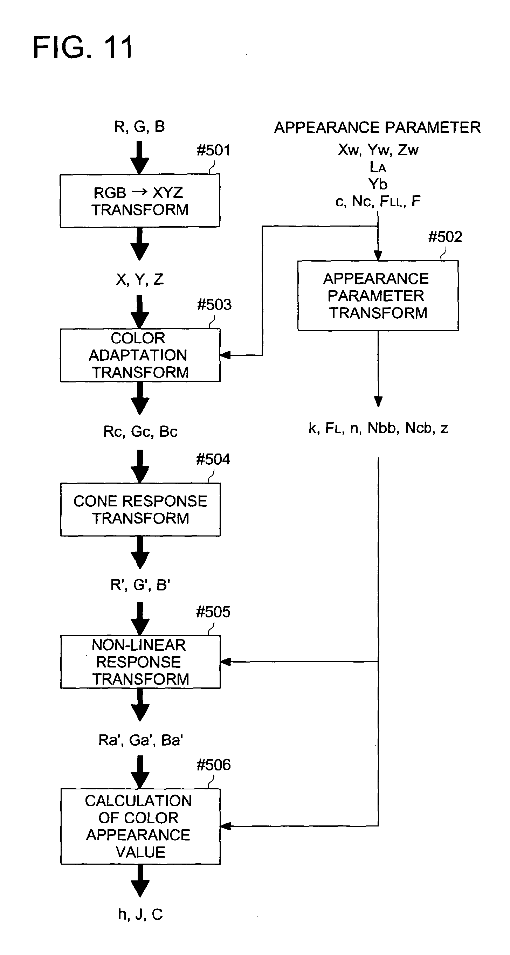

Fig. 11 is a flow chart illustrating contents of processing of CAM forward transform based on CIECAM97s (CIECAM02) by CAM forward transform module shown in Fig. 5.

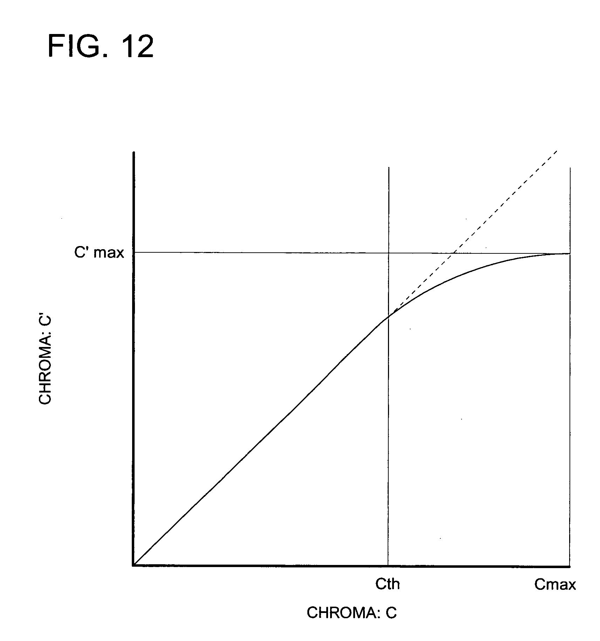

Fig. 12 is a graph showing chroma compression.

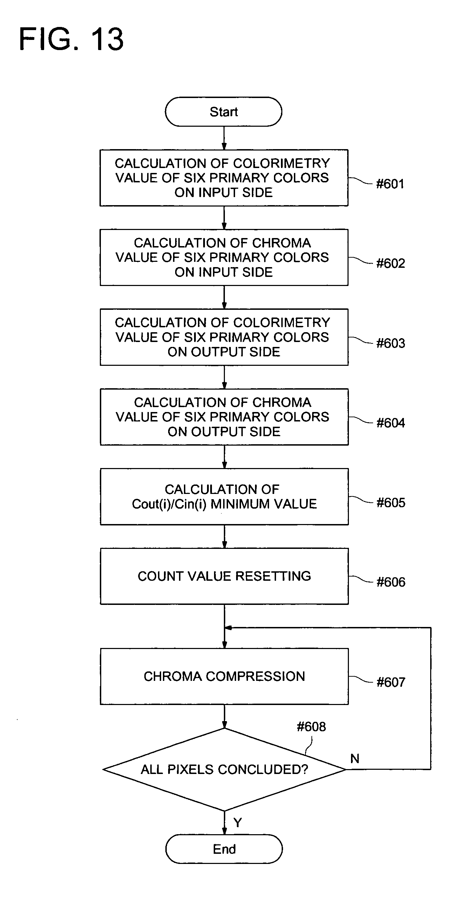

Fig. 13 is a flow chart for illustrating contents of processing conducted by a gamut mapping module shown in Fig. 5.

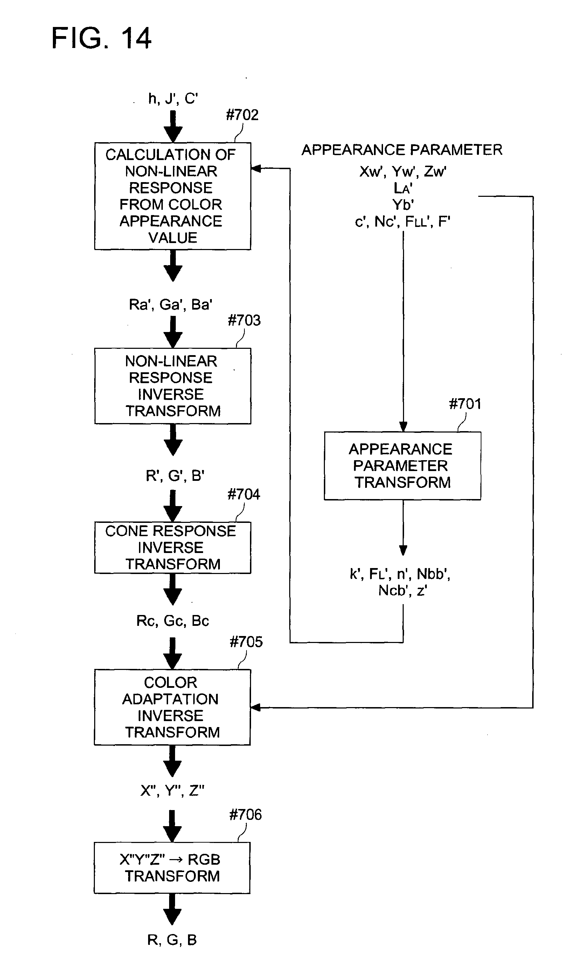

Fig. 14 is a flow chart for illustrating contents of processing of CAM inverse transform based on CIECAM97s (CIECAM02) by CAM inverse transform module shown in Fig. 5.

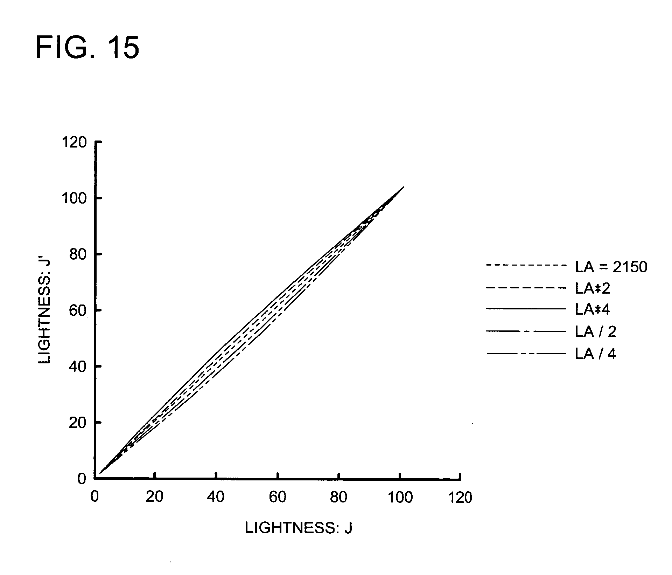

Fig. 15 is a graph showing changes of lightness caused by changes of $L_A$.

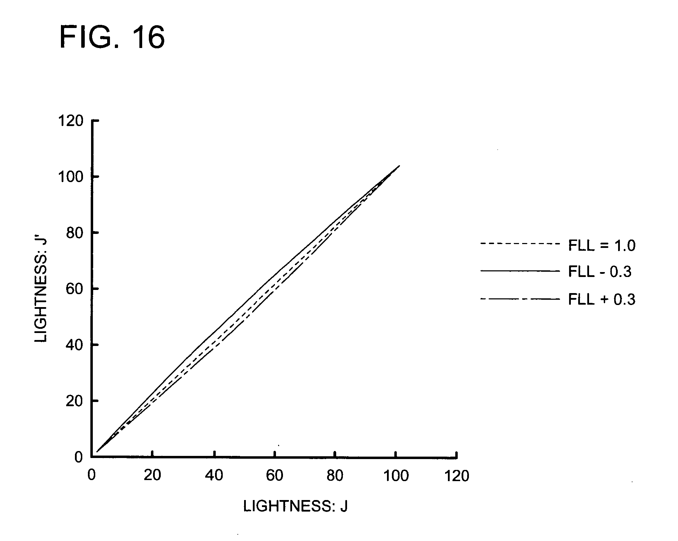

Fig. 16 is a graph showing changes of lightness caused by changes of $F_{LL}$.

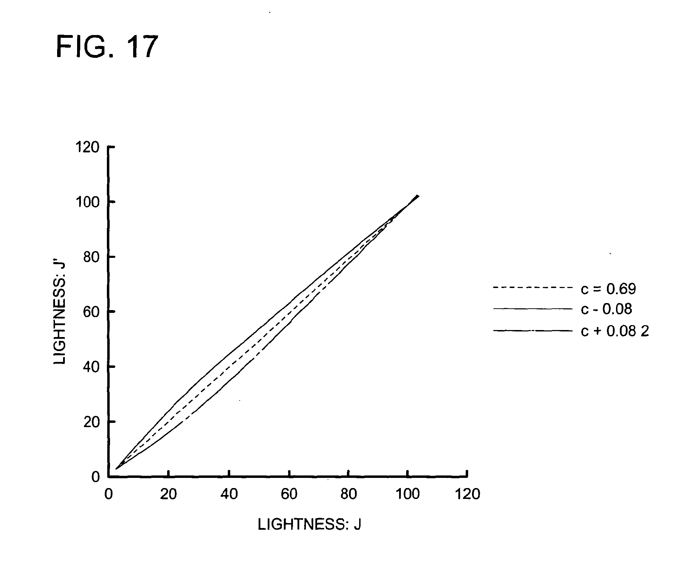

Fig. 17 is a graph showing changes of lightness caused by changes of c.

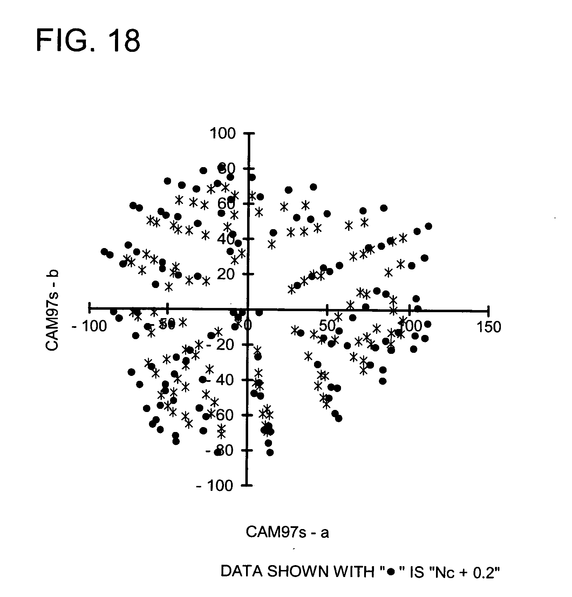

Fig. 18 is a graph showing changes of values of a and b caused by changes of Nc.

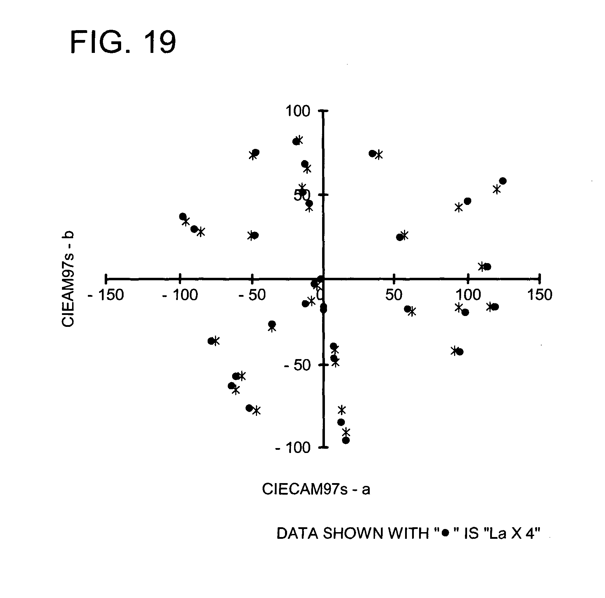

Fig. 19 is a graph showing changes of values of a and b caused by changes of $L_A$.

Fig. 20 is a diagram for illustrating functions of a conventional application software.

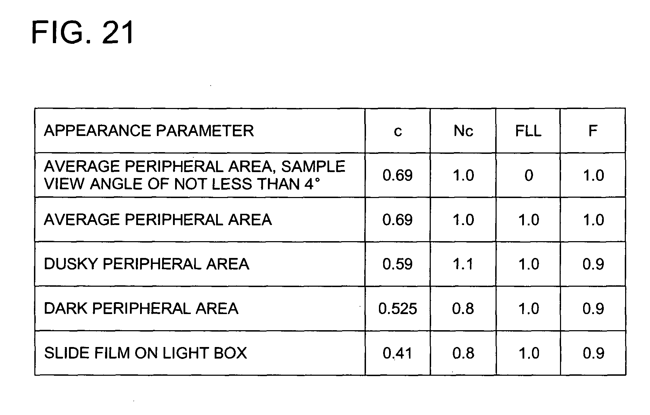

Fig. 21 is a table showing recommended values for setting appearance parameters in CIECAM.

## DETAILED DESCRIPTION OF THE INVENTION

Preferred embodiments of the invention will be explained as follows.

For solving the problems stated above, the embodiment described in Item 1-1 is an image processing apparatus for applying an image transform to an inputted scene referred raw datum based on a color appearance model, the image processing apparatus comprising an image transform parameter calculating section for determining an image transform parameter of the color appearance model, based on the scene referred raw data or information related to the scene referred raw data, and an image transform section for applying the image transform based on the color appearance model to the scene referred raw datum using the determined image transform parameter.

The embodiment described in Item 1-2 is the image processing apparatus of Item 1-1, wherein the image transform parameter calculating section judges whether information representing a photographed-scene type is related to the scene referred raw datum, and when the information is related to the scene referred raw datum, the image transform parameter calculating section determines the photographed-scene type based on the information and calculates the image transform parameter of the color appearance model based on the photographed-scene type.

The embodiment described in Item 1-3 is the image processing apparatus of Item 1-1, further comprising a photographing data analyzing section for determining the photographed-scene type using a photographing condition related to the scene referred raw datum, wherein the image transform parameter calculating section determines the photographed-scene type based on the determined photographed-scene type and calculates the image transform parameter of the color appearance model based on the photographed-scene type.

The embodiment described in Item 1-4 is the image processing apparatus of Item 1-1, wherein the image transform section judges whether the image transform parameter of the color appearance model is related to the scene referred raw datum, and when the image transform parameter is related to the scene referred raw datum, the image transform section applies the image transform to the scene referred raw datum using the image transform parameter.

The embodiment described in Item 1-5 is the image processing apparatus of any one of Items 1-1 through 1-4, wherein the information related to the scene referred raw datum is information representing a photographed-scene type and/or information relating to the photographing condition and the information is added to the tag information area of the scene referred raw datum as meta information.

The embodiment described in Item 1-6 is the image processing apparatus of Item 1-1, further comprising a scene analyzing section for determining a photographed-scene type based on the scene referred raw datum, wherein the image transform parameter calculating section determines the image transform parameter of the color appearance model based on the photographed-scene type.

The embodiment described in Item 1-7 is the image processing apparatus of Item 1-6, wherein when the scene analyzing section determines a photographed-scene type such that a photographed scene includes a person, the image transform parameter calculating section determines the image transform parameter such that a transformed scene referred raw datum has a lower contrast than a scene referred raw datum having a scene without a person.

The embodiment described in Item 1-8 is the image processing apparatus of any one of Items 1-1 through 1-7, wherein the color appearance model is CIECAM97s.

The embodiment described in Item 1-9 the image processing apparatus of any one of Items 1-1 through 1-7, wherein the color appearance model is CIECAM02s.

The embodiment described in Item 1-10 is a image pickup apparatus for outputting a scene referred raw datum, comprising: an output section for outputting the scene referred raw datum related information for an image transform based on a color appearance model.

The embodiment described in Item 1-11 is an image processing method for applying an image transform to an inputted scene referred raw datum based on a color appearance model, the image processing method comprising: an image transform parameter calculating step of determining an image transform parameter of the color appearance model, based on the scene referred raw data or information related to the scene referred raw data, an image transform step of applying the image transform based on the color appearance model to the scene referred raw datum using the determined image transform parameter.

The embodiment described in Item 1-12 the image processing method of Item 1-11, wherein the image transform parameter calculating step judges whether information representing a photographed-scene type is related to the scene referred raw datum, and when the information is related to the scene referred raw datum, the image transform parameter calculating step determines the photographed-scene type based on the information and calculates the image transform parameter of the color appearance model based on the photographed-scene type.

The embodiment described in Item 1-13 is the image processing method of Item 1-11, further comprising a photographing data analyzing step of determining the photographed-scene type using a photographing condition related to the scene referred raw datum, wherein the image transform parameter calculating step determines the photographed-scene type based on the determined photographed-scene type and calculates the image transform parameter of the color appearance model based on the photographed-scene type. (1033)

The embodiment described in Item 1-14 is the image processing method of Item 1-11, further comprising wherein the image transform step judges whether the image transform parameter of the color appearance model is related to the scene referred raw datum, and when the image transform parameter is related to the scene referred raw datum, the image transform step applies the image transform to the scene referred raw datum using the image transform parameter.

The embodiment described in Item 1-15 the image processing method of any one of Items 1-11 through 1-14, wherein the information related to the scene referred raw datum is information representing a photographed-scene type and/or information relating to the photographing condition and the information is added to the tag information area of the scene referred raw datum as meta information.

The embodiment described in Item 1-16 is the image processing method of Item 1-11, further comprising: a scene analyzing step of determining a photographed-scene type based on the scene referred raw datum, wherein the image transform parameter calculating step determines the image transform parameter of the color appearance model based on the photographed-scene type.

The embodiment described in Item 1-17 is the image processing method of Item 1-16, wherein when the scene analyzing step determines a photographed-scene type such that a photographed scene includes a person, the image transform parameter calculating step determines the image transform parameter such that a transformed scene referred raw datum has a lower contrast than a scene referred raw datum having a scene without a person.

The embodiment described in Item 1-18 is the image processing method of any one of Items 1-11 through 1-17, wherein the color appearance model is CIECAM97s.

The embodiment described in Item 1-19 is the image processing method of any one of Items 1-11 through 1-17, wherein the color appearance model is CIECAM02s.

The embodiment described in Item 1-20 is an image data outputting method comprising: an output step of outputting the scene referred raw datum related information for an image transform based on a color appearance model.

The embodiment described in Item 1-21 is an image processing program for use in a computer configuring an image processing apparatus applying an image transform to an inputted scene referred raw datum based on a color appearance model, the image processing program comprising an image transform parameter calculating step of determining an image transform parameter of the color appearance model, based on the scene referred raw data or information related to the scene referred raw data, an image transform step of applying the image transform based on the color appearance model to the scene referred raw datum using the determined image transform parameter.

The embodiment described in Item 1-22 is the image processing program of Item 1-21, wherein the image transform parameter calculating step judges whether information representing a photographed-scene type is related to the scene referred raw datum, and when the information is related to the scene referred raw datum, the image transform parameter calculating step determines the photographed-scene type based on the information and calculates the image transform parameter of the color appearance model based on the photographed-scene type.

The embodiment described in Item 1-23 is the image processing program of Item 1-21, further comprising a photographing data analyzing step of determining the photographed-scene type using a photographing condition related to the scene referred raw datum, wherein the image transform parameter calculating step determines the photographed-scene type based on the determined photographed-scene type and calculates the image transform parameter of the color appearance model based on the photographed-scene type. (1043)

The embodiment described in Item 1-24 is the image processing program of Item 1-21, wherein the image transform step judges whether the image transform parameter of the color appearance model is related to the scene referred raw datum, and when the image transform parameter is related to the scene referred raw datum, the image transform step applies the image transform to the scene referred raw datum using the image transform parameter.

The embodiment described in Item 1-25 is the image processing program of any one of Items 1-21 through 1-24, wherein the information related to the scene referred raw datum is information representing a photographed-scene type and/or information relating to the photographing condition and the information is added to the tag information area of the scene referred raw datum as meta information.

The embodiment described in Item 1-26 is the image processing program of Item 1-21, further comprising: a scene analyzing step of determining a photographed-scene type based on the scene referred raw datum, wherein the image transform parameter calculating step determines the image transform parameter of the color appearance model based on the photographed-scene type.

The embodiment described in Item 1-27 is the image processing program of Item 1-26, wherein when the scene analyzing step determines a photographed-scene type such that a photographed scene includes a person, the image transform parameter calculating step determines the image transform parameter such that a transformed scene referred raw datum has a lower contrast than a scene referred raw datum having a scene without a person.

The embodiment described in Item 1-28 is the image processing program of any one of Items 1-21 through 1-27, wherein the color appearance model is CIECAM97s.

The embodiment described in Item 1-29 is the image processing program of any one of Items 1-21 through 1-27, wherein the color appearance model is CIECAM02s.

The embodiment described in Item 1-30 is an image outputting program for use in a computer configuring an image processing apparatus applying an image transform to an inputted scene referred raw datum based on a color appearance model, the image outputting program, comprising: an output step of outputting the scene referred raw datum related information for an image transform based on a color appearance model.

Another preferred embodiments of the invention will be explained as follows.

For solving the problems stated above, the embodiment described in Item 2-1 is an image processing apparatus to conduct image transform to output them for the inputted scene-referred raw data based on a color appearance model, wherein a judgment is made whether an image transform parameter relating to the color appearance model is related to the aforesaid scene-referred raw data or not, and the image transform is conducted on the scene-referred raw data based on the image transform parameter, when the image transform parameter is not related.

For solving the problems stated above, the embodiment described in Item 2-2 is an image processing apparatus to conduct image transform to output them for the inputted scene-referred raw data based on a color appearance model, wherein a judgment is made whether information indicating photographed-scene is related to the aforesaid scene-referred raw data or not, and when the information is related, the photographed-scene is specified based on the information, then, an image transform parameter relating to the color appearance model is calculated based on the photographed-scene, and the image transform is conducted for the scene-referred raw data based on the image transform parameter thus calculated.

For solving the problems stated above, the embodiment described in Item 2-3 is an image processing apparatus to conduct image transform to output them for the inputted scene-referred raw data based on a color appearance model, wherein a photographed-scene is specified based on information relating to photographing conditions related to the scene-referred raw data, then, an image transform parameter relating to the color appearance model is calculated based on the photographed-scene, and the image transform is conducted for the scene-referred raw data based on the image transform parameter thus calculated.

For solving the problems stated above, the embodiment described in Item 2-4 is an image processing apparatus to conduct image transform to output them for the inputted scene-referred raw data based on a color appearance model, wherein a photographed-scene is specified based on the scene-referred raw data, then, an image transform parameter relating to the color appearance model is calculated based on the photographed-scene, and the image transform is conducted for the scene-referred raw data based on the image transform parameter thus calculated.

For solving the problems stated above, the embodiment described in Item 2-5 is an image processing apparatus to conduct image transform to output them for the inputted scene-referred raw data based on a color appearance model, wherein a judgment is made whether an image transform parameter relating to the color appearance model is related to the scene-referred raw data or not, and when the image transform parameter is related, the image transform is conducted for the scene-referred raw data based on the image transform parameter, and when the image transform parameter is not related, a judgment is further made whether information indicating photographed-scene is related to the scene-referred raw data or not, while when that information is related, the photographed-scene is specified based on the information, an image transform parameter relating to the color appearance model is calculated based on the photographed-scene, and the image transform is conducted for the scene-referred raw data based on the calculated image transform parameter, and when the information indicating the photographed-scene is not related, the photographed-scene is specified based on the scene-referred raw data or on information relating to photographing conditions related to the scene-referred raw data, an image transform parameter relating to the color appearance model is calculated based on the photographed-scene, and the image transform is conducted for the scene-referred raw data based on the calculated image transform parameter.

Further, as in the embodiment described in Item 2-6, information showing the photographed-scene and information relating to the photographing information are related to the scene referred raw as Exif information, in the embodiment described in Item 2-2, Item 2-3 or Item 2-5.

Further, as in the embodiment described in Item 2-7, when specifying a photographed-scene based on the scene-referred raw data, a judgment is made whether a person subject is included in the photographed-scene or not, and when calculating an image transform parameter relating to the color appearance model based on the photographed-scene in the case of the person subject included, an image transform parameter for setting contrast of the image data to be lower compared with an occasion of a photographed-scene including no person subject, is calculated, in the embodiment described in Item 2-4 or Item 2-5.

Further, as in the embodiment described in Item 2-8, the color appearance model is CIECAM97s in the embodiment described in any one of Items 2-1 through 2-7.

Further, as in the embodiment described in Item 2-9, the color appearance model is CIECAM02 in the embodiment described in any one of Items 2-1 through 2-7.

For solving the problems stated above, the embodiment described in Item 2-10 is an image pickup apparatus outputting scene-referred raw data, wherein the scene-referred raw data are outputted after being provided with an image transform parameter that is used when an image is transformed based on a color appearance model.

For solving the problems stated above, the embodiment described in Item 2-11 is an image processing method for image-transforming inputted scene-referred raw data based on a color appearance model to output them, wherein a judgment is made whether an image transform parameter relating to the color appearance model is related to the scene-referred raw data or not, and when the image transform parameter is related, the image transform is conducted for the scene-referred raw data based on the image transform parameter.

For solving the problems stated above, the embodiment described in Item 2-12 is an image processing method for image-transforming inputted scene-referred raw data based on a color appearance model to output them, wherein a judgment is made whether information showing a photographed-scene is related to the scene-referred raw data or not, and when the information is related, the photographed-scene is specified based on that information, then, an image transform parameter relating to the color appearance model is calculated based on the photographed-scene, and the image transform is conducted for the scene-referred raw data based on the calculated image transform parameter.

For solving the problems stated above, the embodiment described in Item 2-13 is an image processing method for image-transforming inputted scene-referred raw data based on a color appearance model to output them, wherein a photographed-scene is specified based on information relating to photographing conditions related to the scene-referred raw data, then, an image transform parameter relating to the color appearance model is calculated based on the photographed-scene, and the image transform is conducted for the scene-referred raw data based on the calculated image transform parameter.

For solving the problems stated above, the embodiment described in Item 2-14 is an image processing method for image-transforming inputted scene-referred raw data based on a color appearance model to output them, wherein a photographed-scene is specified based on the scene-referred raw data, then, an image transform parameter relating to the color appearance model is calculated based on the photographed-scene, and the image transform is conducted for the scene-referred raw data based on the calculated image transform parameter.

For solving the problems stated above, the embodiment described in Item 2-15 is an image processing method for image-transforming inputted scene-referred raw data based on a color appearance model to output them, wherein a judgment is made whether an image transform parameter relating to the color appearance model is related to the scene-referred raw data or not, and when the image transform parameter is related, the image transform is conducted for the scene-referred raw data based on the image transform parameter, and when the image transform parameter is not related, a judgment is further made whether information indicating photographed-scene is related to the scene-referred raw data or not, while when that information is related, the photographed-scene is specified based on the information, an image transform parameter relating to the color appearance model is calculated based on the photographed-scene, and the image transform is conducted for the scene-referred raw data based on the calculated image transform parameter, and when the information indicating the photographed-scene is not related, the photographed-scene is specified based on the scene-referred raw data or on information relating to photographing conditions related to the scene-referred raw data, an image transform parameter relating to the color appearance model is calculated based on the photographed-scene, and the image transform is conducted for the scene-referred raw data based on the calculated image transform parameter.

Further, as in the embodiment described in Item 2-16, information showing the photographed-scene and information relating to the photographing information are related to the scene referred raw as Exif information, in the embodiment described in Item 2-12, Item 2-13 or Item 2-15.

Further, as in the embodiment described in Item 2-17, when specifying a photographed-scene based on the scene-referred raw data, a judgment is made whether a person subject is included in the photographed-scene or not, and when calculating an image transform parameter relating to the color appearance model based on the photographed-scene in the case of the person subject included, there is calculated an image transform parameter for setting contrast of the image data to be lower compared with an occasion of a photographed-scene including no person subject, in the embodiment described in Item 2-14 or Item 2-15.

Further, as in the embodiment described in Item 2-18, the color appearance model is CIECAM97s in the embodiment described in any one of Items 2-11 through 2-17.

Further, as in the embodiment described in Item 2-19, the color appearance model is CIECAM02 in the embodiment described in any one of Items 2-11 through 2-17.

For solving the problems stated above, the embodiment described in Item 2-20 is an image data output method that outputs scene-referred raw data, wherein the scene-referred raw data are outputted after being provided with an image transform parameter that is used when an image is transformed based on a color appearance model.

For solving the problems stated above, the embodiment described in Item 2-21 is a computer that controls an image processing apparatus for image-transforming inputted scene-referred raw data based on a color appearance model to output them, wherein there are realized functions to judge whether an image transform parameter relating to the color appearance model is related to the scene-referred raw data or not, and to conduct the image transform for the scene-referred raw data based on the image transform parameter when the image transform parameter is related.

For solving the problems stated above, the embodiment described in Item 2-22 is a computer that controls an image processing apparatus for image-transforming inputted scene-referred raw data based on a color appearance model to output them, wherein there are realized functions to judge whether information showing a photographed-scene is related to the scene-referred raw data or not, and to specify the photographed-scene when the information is related, then to calculate an image transform parameter relating to the color appearance model based on the photographed-scene, and to conduct the image transform for the scene-referred raw data based on the calculated image transform parameter.

For solving the problems stated above, the embodiment described in Item 2-23 is a computer that controls an image processing apparatus for image-transforming inputted scene-referred raw data based on a color appearance model to output them, wherein there are realized functions to specify a photographed-scene based on information relating to photographing conditions related to the scene-referred raw data, then, to calculate an image transform parameter relating to the color appearance model based on the photographed-scene, and to conduct the image transform for the scene-referred raw data based on the calculated image transform parameter.

For solving the problems stated above, the embodiment described in Item 2-24 is a computer that controls an image processing apparatus for image-transforming inputted scene-referred raw data based on a color appearance model to output them, wherein there are realized functions to specify a photographed-scene based on the scene-referred raw data, then, to calculate an image transform parameter relating to the color appearance model based on the photographed-scene, and to conduct the image transform for the scene-referred raw data based on the calculated image transform parameter.

For solving the problems stated above, the embodiment described in Item 2-24 is a computer that controls an image processing apparatus for image-transforming inputted scene-referred raw data based on a color appearance model to output them, wherein there are realized functions to judge whether an image transform parameter relating to the color appearance model is related to the scene-referred raw data or not, and to conduct the image transform for the scene-referred raw data based on the image transform parameter when the image transform parameter is related, then, to judge further whether information indicating photographed-scene is related to the scene-referred raw data or not when the image transform parameter is not related, then, to specify photographed-scene based on the information when that information is related, to calculate an image transform parameter relating to the color appearance model based on the photographed-scene, and thereby to conduct the image transform for the scene-referred raw data based on the calculated image transform parameter, thus, to specify a photographed-scene based on information relating to the scene-referred raw data or to photographing conditions related to the scene-referred raw data when the information indicating the photographed-scene is not related, and to calculate an image transform parameter relating to the color appearance model based on the photographed-scene to conduct the image transform for the scene-referred raw data based on the calculated image transform parameter.

Further, as in the embodiment described in Item 2-26, it is preferable that information showing the photographed-scene and information relating to the photographing information are related to the scene referred raw as Exif information, in the embodiment described in Item 2-22, Item 2-23 or Item 2-25.

Further, as in the embodiment described in Item 2-27, it is preferable that, when specifying a photographed-scene based on the scene-referred raw data, a judgment is made whether a person subject is included in the photographed-scene or not, and when calculating an image transform parameter relating to the color appearance model based on the photographed-scene in the case of the person subject included, there is calculated an image transform parameter for setting contrast of the image data to be lower compared with an occasion of a photographed-scene including no person subject, in the embodiment described in Item 2-24 or Item 2-25.

Further, as in the embodiment described in Item 2-28, it is preferable that the color appearance model is CIECAM97s in the embodiment described in any one of Items 2-21 through 2-27.

Further, as in the embodiment described in Item 2-29, it is preferable that the color appearance model is CIECAM02 in the embodiment described in any one of Items 2-21 through 2-27.

For solving the problems stated above, the embodiment described in Item 2-30 is a computer that controls an image pickup apparatus that outputs scene-referred raw data wherein there are realized functions to output the scene-referred raw data after an image transform parameter that is used when an image is transformed based on a color appearance model is related to the scene-referred raw data.

Scene-referred raw data described in the aforesaid Items mean image data belonging to the scene-referred raw state and data that can be transformed to image data belonging to the scene-referred raw state.

The image state is a terminology that has recently assimilated as a general idea showing "the rendering state of image data" (a detailed definition of the word is shown, for example, in "Requirements for Unambiguous Specification of a Color Encoding ISO 22028-1", Kevin Spaulding, in Proc. Tenth Color Imaging Conference: Color Science and Engineering Systems, Technologies, Applications, IS&T, Springfield, VA, p. 106-111 (2002)).

"Scene-referred" means image data correlated to characteristics of the actual photographed-scene photographed by an image pickup apparatus such as a digital camera, and it means image data transformed into color space that is defined colorimetrically and is proportional to luminance of the scene. Further, image data which are neither corrected nor emphasized intentionally, and can be transformed in terms of luminance and lightness value of the scene by the transform that can be described with a simple numerical expression are included in "scene-referred", even if the image data are not proportional to luminance. For example, it is possible to transform raw data used generally for a digital camera into colorimetric values of the scene, by applying, on the raw data, the matrix operation indicating characteristics of an image sensor, and thus, the raw data are included in "scene-referred".

Namely, the scene-referred raw data described in the aforesaid Structure are specifically the raw data by the digital camera and those obtained by transforming that data into color space where a transforming method is defined colorimetrically, and they correspond to image data which are neither corrected nor emphasized intentionally. A relationship between a luminance value of a pixel and scene luminance is not limited to the linear relationship, and OECF (photoelectric transform characteristics, defined by ISO14524 and tone transform have only to be known.

In the invention, when the inputted scene-referred raw data are outputted to an output device, an image transform parameter relating to a color appearance model can be calculated from either one of information (Exif information) that is inputted after being related to scene-referred raw data, or indicating photographed-scene that is inputted after being related to scene-referred raw data in advance, and information indicating photographed-scene specified based on scene-referred raw data. Therefore, image transform based on a color appearance model can be conducted by the use of the image transform parameter. Accordingly, even when image data having luminance that is proportional to that of photographed-scene as in scene-referred raw data, it is possible to conduct constantly the image transform based on the image transform parameter, which makes it possible to prepare constantly appropriate image data for output.

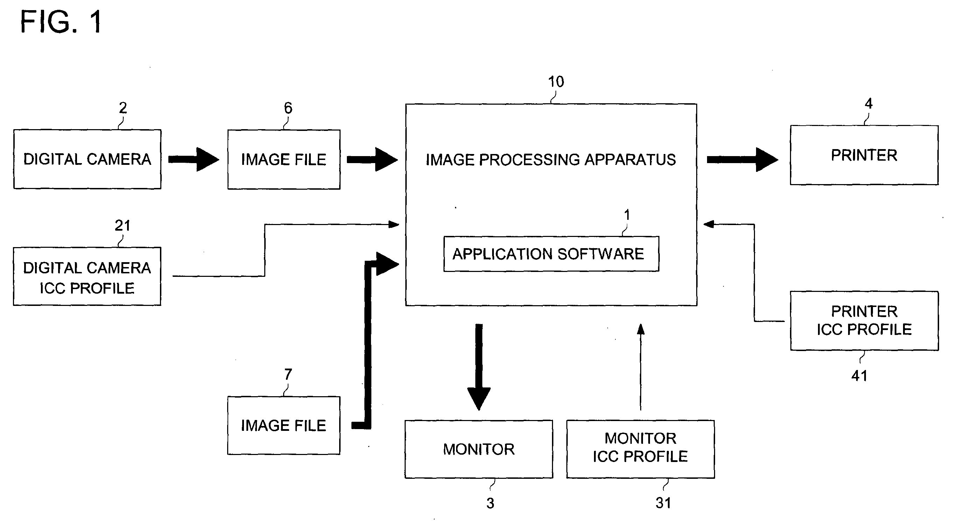

First, connection relationship between image processing apparatus 10 and various types of equipment in the present embodiment will be explained as follows, referring to Fig. 1.

As shown in Fig. 1, digital camera 2, monitor 2 such as CRT and printer 4 are connected to the image processing apparatus 10.

The image processing apparatus 10 has application software 1 representing a program for conducting image processing for various types of image files inputted. The digital camera 2 outputs image file 6 to which the data to be used in combination with the application software 1 is related. The application software 1 reads image file 6 to process it, and outputs to monitor 3 or printer 4. The application software 1 is also possible to process image file 7 taken by ordinary digital camera other than the digital camera 2. Digital camera ICC profile 21, monitor ICC profile 31 and printer ICC profile 41 each having thereon described characteristics are prepared respectively on digital camera 2, monitor 3 and printer 4.

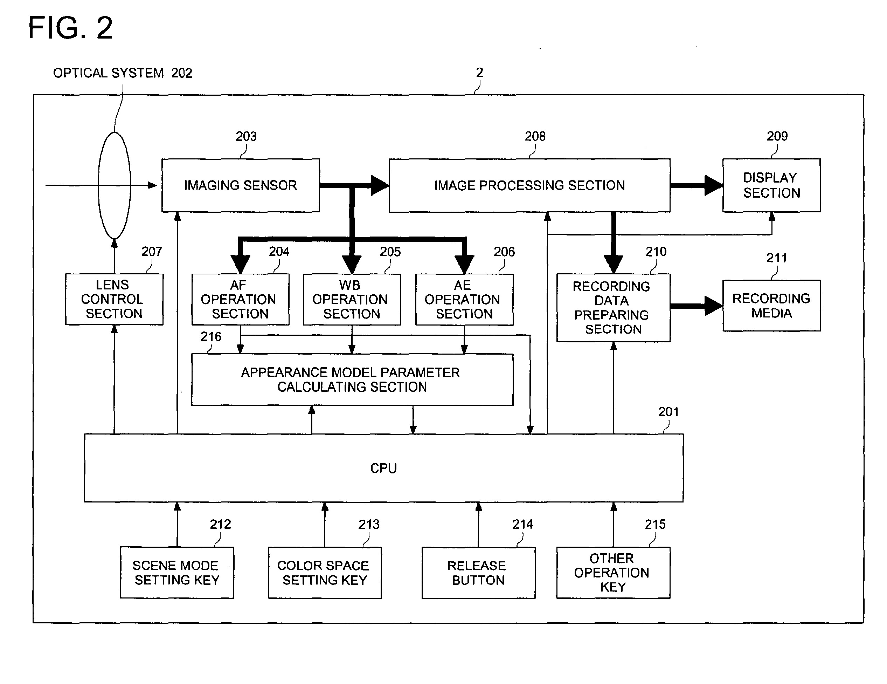

Next, an internal structure of the digital camera 2 will be explained as follows, referring to Fig. 2.

CPU 201 controls operations of the digital camera 2 collectively. Optical system 202 is a zoom lens which forms an image of a subject on CCD image sensor on imaging sensor 203. The imaging sensor 203 transforms an optical image photoelectrically with CCD and conducts analogue-to-digital conversion to output. The image data thus outputted are inputted respectively in AF operation section 204, WB operation section 205, AE operation section 206 and in image processing section 208. The AF operation section 204 obtains distances between AF areas arranged at 9 locations on an image area, and outputs them. Judgment of the distance is conducted by judgment of contrast of images. CPU 201 selects the value that is located at the nearest position to make it to be a subject distance. The WB operation section 205 outputs a white balance evaluation value of the image. The white balance evaluation value is a gain value necessary to make RGB output values of a neutral subject to agree under the light source in the case of photographing, and it is calculated as a ratio of R/G and a ratio of B/G with G channel serving as a standard. The evaluation value thus calculated is inputted in image processing section 208, and a white balance of the image is adjusted. The AE operation section 206 obtains an appropriate exposure value from image data and outputs it. The CPU 201 calculates an aperture value and a shutter speed value which make the calculated appropriate exposure value and the existing exposure value to agree with each other. The aperture value is outputted by lens control section 207, and the aperture diameter corresponding to the aperture value is set. The shutter speed value is outputted to imaging sensor section 203, and CCD integral time corresponding thereto is established. Image processing section 208 conducts series of image processing such as white balance processing, interpolation processing of CCD filter arrangement, color transform, contrast transform, sharpness correction and JPEG compression. JPEG-compressed image data are outputted to display section 209 and recording data preparing section 210. The display section 209 displays picked-up images on a liquid crystal display and displays various types of information by instruction of CPU 201. The recording data preparing section 210 formats JPEG-compressed image data and various types of photographed data inputted from CPU 201 on Exif file to record them on recording medium 211.

Digital camera 2 is provided with release button 214 for inputting photographing instructions and with another operation key 215 including an on-off key for a power source.

The digital camera 2 is characterized to have appearance model parameter calculating section 216 in addition to the structure of the ordinary digital camera mentioned above.

The appearance model parameter calculating section 216 calculates a correct exposure value (namely, luminance of a subject) calculated from AE operation section 206, white color R/G and B/G ratios in photographed-scene type calculated by WB operation section 205, a position of a subject calculated by AF operation section 204 and an appearance parameter to be set from imaged image data to a color appearance model. Detailed operations of the foregoing will be explained later. The calculated values are recorded in the image data file by record data preparing section 210, to be outputted. The image data are recorded in a form of JPEG of Exif file format which is a standard in general digital cameras, wherein there is a portion called a maker note (tag information area) as a space on which each maker can write free information, and the appearance parameter is recorded on this portion as meta information.

In the digital camera 2, a photographed-scene mode can be switched through user setting. Namely, three modes including an ordinary mode, a portrait mode and a scenery mode can be selected as a photographed-scene mode, and a user can switch to the portrait mode when a subject is a person, or switch to the scenery mode when a subject is a scenery, by operating scene mode setting key 212, and thereby to obtain an appropriate image for each case. Further, in the digital camera 2, information of the selected photographed-scene mode is added or related to the maker note portion of the image data file, to be recorded. Incidentally, it is also possible to compose a digital camera wherein a photographed-scene is automatically decided and switched (for example, see TOKKAI No. 2003-18433).

Further, the digital camera 2 records information of a position of AF area selected as a subject and information of a size of CCD used on an image file in the same way.

Further, in the digital camera 2, output color space can be set by a user through color space setting key 213. As the output color space, it is possible to select either one of scRGB representing scene-referred color space and sRGB and Raw representing output-referred color space. When sRGB is selected, an image transformed into sRGB color space subjected to various image processing in the camera is outputted, in the same way as in the conventional digital camera. This processing is the same as that in the conventional digital camera. When scRGB color space is selected, transform is conducted based on IEC standard (IEC61966-2-2), to output images. When Raw is selected, outputting is conducted with a color space peculiar to CCD.

Incidentally, in the case of application software 1, the switching of photographed-scene mode stated above is possible, and in addition to the combination with the digital camera that records the information of switching on the image data to output it, a combination with a digital camera that records ordinary Exif information or a combination with a digital camera that records only image data and does not record additional information, can be used.

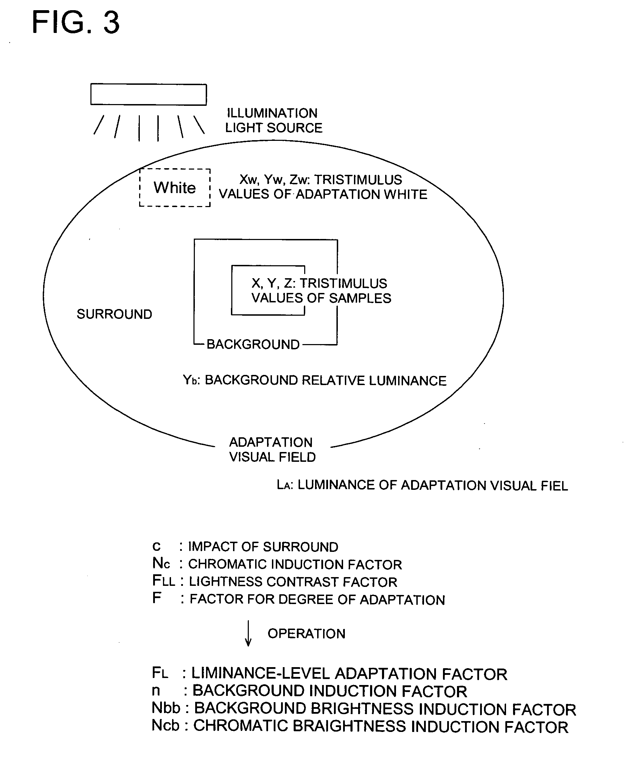

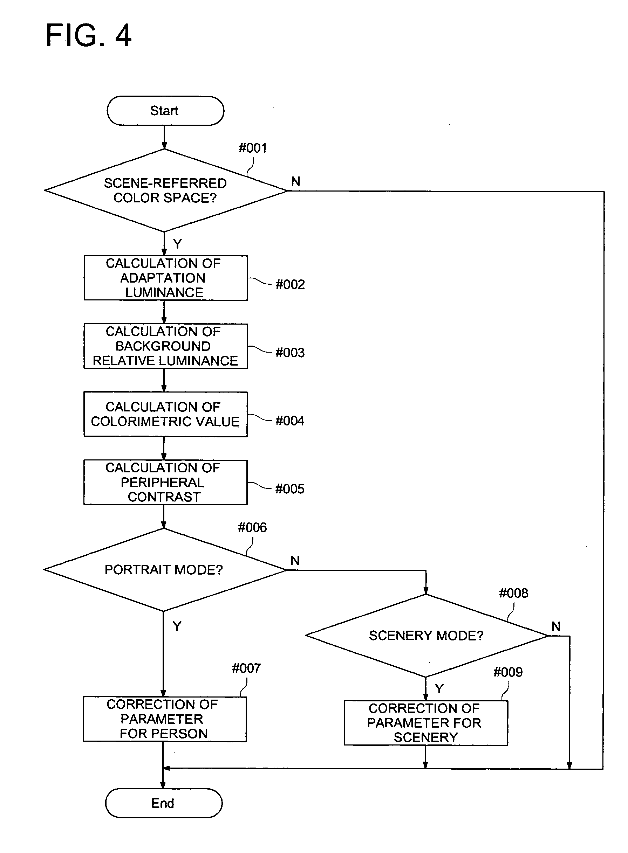

Next, appearance model parameter calculating section 216 will be explained in detail, referring to Figs. 3 and 4. Incidentally, in the present embodiment, although CIECAM97s is used as a color appearance model, CIECAM02 is the same as CIECAM97s in terms of the basic structure, and the explanation here also applies, as it is, to CIECAM02 accordingly.

Appearance parameters to be established in CIECAM 97s include $L_A$ shown in Fig. 3: average luminance of adapting field area, Yb: relative luminance of background area, Xw, Yw, Zw: relative colorimetric values of adapting white color, c: impact of surround of peripheral area, Nc: chromatic induction factor, $F_{LL}$: lightness contrast factor and F: factor for degree of adaptation. Appearance model parameter calculating section 216 calculates these six appearance parameters in accordance with the flow chart in Fig. 4.

First, in step #001, a judgment is made whether the color space setting is scene-referred or not. When it is other than scene-referred (step #001; No), the present processing is terminated. When the color space setting is scene-referred (step #001; Yes), the flow moves to step #002. In the step #002, average luminance $L_A$ of adapting field area is calculated. In this case, $L_A$ is calculated from a correct exposure value (control luminance) of the camera inputted from AE operation section 206. Since the correct exposure value is operated by Bv value of APEX system, it is transformed into luminance value $L_A$ in cd/m$^2$ by the following expression.

(Numeral 1)

$$L_A = 2^{BV} \cdot K \cdot N$$

K: Calibration constant of exposure meter (= 14)
N: Constant (= 0.3)

Next, in step #003, relative luminance Yb of the background area is calculated. In this case, based on AF focusing point information inputted from AF operation section 204, average luminance value Bvc of a pixel belonging to view angle 2° whose center is AF focusing point of image data and average luminance Bvb of a pixel belonging to an area of view angle 10° are calculated, and Yb is set by the following expression by the use of the results of the aforementioned calculation. In each of the area of view angle 2° and the area of view angle 10°, a field angle is obtained from a size of the sensor used and from a focal length of the lens in photographing, and thereby, the relationship between the field angle and the number of pixels can be decided.

(Numeral 2)

$$Yb = 2^{Bvb} / 2^{Bvc} \text{ x } 0.18 \text{ x } 100$$

When Yb exceeds 100, however, the value is limited to 100. Although the area with view angle 2° whose center is AF focusing point and the area with view angle 10° whose center is AF focusing point are referred to in this case here, there is also an occasion where an area with view angle of more than 2° whose center is AF focusing point is looked in actual photographed-scene, and for example, there are considered a method to detect a subject of a person, and thereby to obtain Yb from a ratio of the person area to its peripheral area and a method to use fixed value Yb = 18, because the reflectance of the average scene is 18%.

Then, in step #4, colorimetric values Xw, Yw and Zw of a white color of the adapting field area are calculated. First, color temperature value T of a light source is calculated according to the following expression, from R/G ratio and B/G ratio of white balance inputted from WB operation section 205.

(Numeral 3)

$$l/T = A0 - Al \text{ x } \ln [(R/G)/(B/G)]$$

A0, A1: Constant determined by sensor spectral characteristics

From the color temperature T thus obtained, chromaticity values x and y of blackbody radiation in the color temperature T are obtained by referring to a conversion table. An adapting white color of the scene is represented by a subject having reflectance of 90%, here, and following values are set to Xw, Yw and Zw.

(Numeral 4)

$$Xw = x \times 90/y$$

$$Yw = 90$$

$$Zw = (1 - x - y) \times 90/y$$

Next, in step #005, contrast of a peripheral area is calculated. The peripheral area in this case means an area that is outside the background area obtained in step #003. Therefore, an area with view angle 2° whose center is AF focusing point is obtained first in the same way as in step #003, and average luminance value Bvs of an area that belongs to the outside of the aforesaid area in an image area is calculated. Based on a difference between Bvc and Bvs obtained in step #003, there are determined appearance parameters including c, Nc, $F_{LL}$ and F. With respect to these appearance parameters, values shown in Fig. 21 are recommended depending on conditions of the peripheral area, for CIECAM97s. Accordingly, the conditions are judged as follows based on a difference between Bvc and Bvs, and appearance parameters are established in accordance with contents shown in Fig. 21.

(Numeral 5)

Bvs - Bvc < 0     Average peripheral area

Bvs - Bvc > 2.7     Dark peripheral area

Otherwise     Dim peripheral area

Though the values stated above are used as boundaries to divide the conditions in this case, it is also possible to consider a method to interpolate (Bvs - Bvc) values in the values shown in Fig. 21.
Next, in step #006, a scene mode is judged whether it is set to portrait mode (person mode) or not, and when the portrait mode is set (step #006; Yes), the flow moves to step #007 wherein the appearance parameter for a person calculated to lower image contrast is corrected. When the scene mode other than the foregoing is set (step #006; No), the flow moves to step #008 wherein a judgment is made whether a scene mode is assigned or not. When the scene mode is set (step #008; Yes), the flow moves to step #9 wherein the appearance parameter for a scene calculated for emphasizing further image chroma is corrected. When a scene mode other than a scenery mode is set (step #008; No), the present processing is terminated.
In the portrait mode, it is preferable that "lightness" corresponding to a flesh color such as a face is in a medium area, contrast is slightly low, and images are reproduced to be bright. Among appearance parameters, those related to contrast of "lightness" are three parameters including $L_A$, $F_{LL}$ and c. Results of changes of these parameters are shown in Figs. 15 - 17. For lowering contrast at the medium area of "lightness" and thereby for reproducing more brightly, the appearance parameter may be corrected based on the following method, which is understood from each figure. Namely, $L_A$ is further made to be smaller, $F_{LL}$ is further made to be smaller, or c is further made to be smaller. Though, any of these methods mentioned above can be used, a method to correct a value of $L_A$ to one fourth of the set value is assumed to be used in the present embodiment.
In the case of a scene mode, an image that is slightly bright has a tendency to be desired. Among appearance parameters, those related to color brightness are Nc and $L_A$. Each of Figs. 18 and 19 shows changes in chroma in the case of changing Nc and $L_A$, which are shown on a plane on which coordinates are represented by ab values of CIECAM97s. For making an image to be bright, the appearance parameter may be corrected based on the following method, which is understood from each figure. Namely, $L_A$ is further made to be larger, or Nc is further made to be larger. Though, any of these methods mentioned above can be used, a method to correct a value of Nc to a value which added 0.2 to the set value is assumed to be used in the present embodiment.
Next, functions of application software 1 will be explained as follows, referring to Fig. 5.
The application software 1 is composed of scene analysis module 101, photographing data analysis module 102, appearance parameter calculation module 103, CAM forward transform module 104 by a color appearance model, gamut mapping module 105 and CAM inverse transform module 106 by a color appearance model. That is, the application software 1 is characterized in that scene analysis module 101, photographing data analysis module 102 and appearance parameter calculation module 103 are added to conventional application software la shown in Fig. 20.

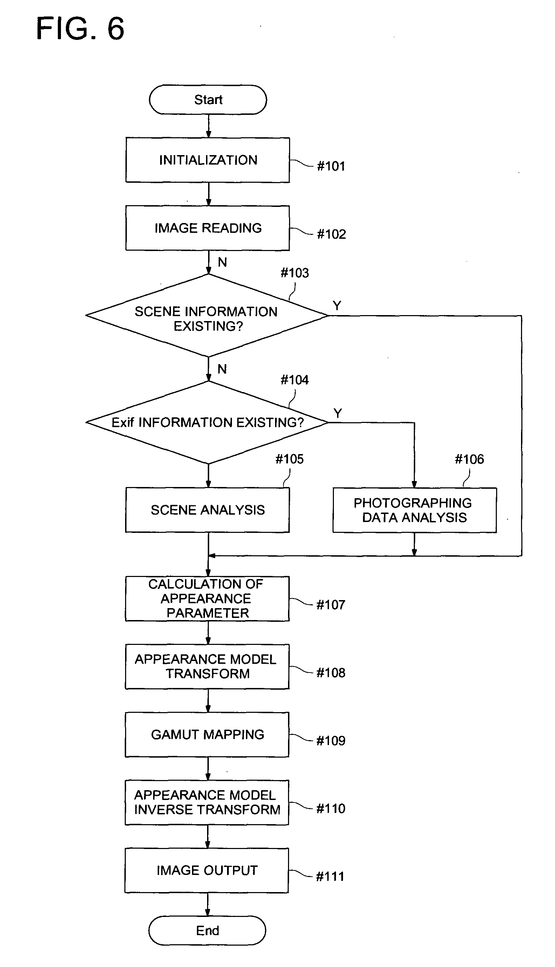

Next, contents of processing by application software 1 will be explained in detail as follows, referring to Fig. 6. The contents of processing explained here are conducted when an unillustrated CPU of image processing apparatus 10 carries out application software 1.

First, in step #101, there is conducted initialization such as resetting of a variable number and a flag to be used. In step #102, scene-referred raw data are read from digital camera 2 in accordance with an instruction of a user. Then, in step #103, whether photographed-scene mode information of digital camera 2 is included in the scene-referred raw data or not is judged, and when the information is included (step #103, Yes), the flow moves to step #107, while when the information is not included (step #103, No), the flow moves to step #104. In step #104, whether Exif information is related to the scene-referred raw data or not is judged, and when the Exif information is related (step #104, Yes), the flow moves to step #106, and photographed-scene is specified from Exif information by photographing data analysis module 103. When the Exif information is not related to the scene-referred raw data in the stage of step #104 (step #104, No), the flow moves to step #105, and the scene-referred raw data is analyzed by scene analysis module 102 to specify the photographed-scene. In step #107, image data are CAM-forward-transformed by CAM forward transform module 101 in accordance with a color appearance model. Incidentally, this color appearance model is one for correcting a difference of viewing conditions between a monitor and a printer under the average office environment, and an appearance parameter used for CAM forward transform cannot be changed. Next, in step #108, the transformed image data are subjected to correction of tones and/or colors by image transform module 104, and then, the flow moves to step #109 where gamut mapping processing is conducted by gamut mapping module 105. Finally, in step #110, CAM inverse transform based on the color appearance model is conducted by CAM inverse transform module 106, and in step #111, output image (output-referred raw data) after the CAM inverse transform is outputted to an output device.

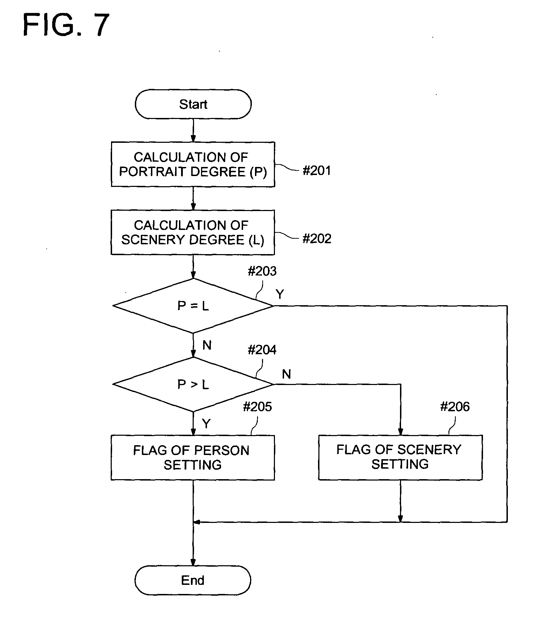

Referring to Fig. 7, contents of processing by the photographing data analysis module 102 will be explained in detail, next.

When the photographing data analysis module 102 is carried out, a photographed-scene is specified by using information such as luminance, a focal length of a lens and a photographing distance all recorded as Exif information.

First, portrait rate P is calculated in step #201, first. In this case, the portrait rate is calculated based on a membership function shown in Fig. 8, by the use of information about luminance Bv and focal length f' both recorded in Exif information and of information about image magnification $\beta$ (= f'/D) which is calculated from a focal length of the lens and photographing distance D. The membership function is one showing a rate (probability) of a portrait scene to a focal length of a lens, and it can be considered to be one showing frequency in use in the scene to be judged. Portrait rate for luminance $P_{Bv}$ is found from Xa graph in Fig. 8 (a), portrait rate for a focal length $P_f$, is found from Xa Fig. 8 (b), and portrait rate for an image magnification $P_\beta$ is found Fig. 8 (c), and P is calculated from the following expression.

(Numeral 6)

$$P = P_{Bv} \times P_{f'} \times P_\beta$$

In step #202, scenery rate L is calculated equally.

(Numeral 7)

$$L = L_{Bv} \times L_{f'} \times L_\beta$$

Next, in step #203, P and L are judged whether both of them are the same each other or not, and when they are the same each other (step #203; Yes), the then processing is ended, while, when they are different each other (step #203; No), the flow moves to step #204, and P is judged whether it is larger than L. When P is larger than L (step #204; Yes), the flow moves to step #205, and a flag of a person is set and the then processing is ended. When P is not larger than L (step #204; No), the flow moves to step #206, and a flag of a scenery is set and the then processing is ended.

Next, contents of processing by the scene analysis module 101 will be explained in detail as follows, referring to Fig. 9.

When the scene analysis module 101 is executed, a judgment is made whether a flesh color area is included in image data or not, and the image is judged whether it is for a person or not based on the results of the aforementioned judgment. Further, by measuring its area, a size of the person can be estimated.

First, in step #301, information in digital camera ICC profile 21 is read. Then, in, in step #302, RGB values of image data are transformed into colorimetric values XYZ. More specifically, 3 x 3 matrix coefficient recorded on digital camera ICC profile 21 which has been read or a three-dimensional look-up table is used to transform into colorimetric values in a method corresponding to each case. Then, in step #303, XYZ values are transformed into L*a*b* values. Then, in step #304, a pixel count value used for pixel counting is reset to zero. Then, in step #305, a value of each pixel transformed into L*a*b* value is judged whether it belongs to a flesh color area established in advance or not, and when it belongs to the flesh color area (step #305; Yes), the flow moves to step #306 to add 1 to a flesh color pixel count value, and then, to step #307. When it does not belong to a flesh color area (step #305; No), the flow moves to step #307. In step #307, 1 is added to the pixel count value, while, in step #308, the pixel count value is compared with the total number of pixels, to judge whether processing for all pixels has been terminated or not. When the processing has not been terminated (step #308; No), the flow goes back to step #305 to repeat processing of the steps #305 - #308. When the processing for all pixels has been terminated (step #308; Yes), the flow moves to step #309 to judge whether a value of a flesh color rate obtained by dividing a count value of flesh color pixels with a count value for all pixels is greater than threshold value TH or not, and when the value of a flesh color rate is greater than the threshold value TH (step #309; Yes), the flow moves to step #310 to set a flag of a person showing that a subject is a person to terminate the present processing. When the value of a flesh color rate is not greater than the threshold value TH (step #309; No), the flow moves to step #311 to reset a flag of a person and the present processing is terminated.

Next, contents of processing by appearance parameter calculation module 103 will be explained in detail as follows, referring to Fig. 10. A basis of a method of setting an appearance parameter is the same as that in the case of appearance model parameter calculating section 216 in the digital camera 2 explained above.

First, in step #401, an appearance parameter recorded by the digital camera 2 is judged whether it exists or not. When the appearance parameter exists (step #401; Yes), the flow moves to step #411 to set the appearance parameter on the appearance model to terminate the present processing. When the appearance parameter does not exist (step #401; No), the flow moves to step #402 to judge whether the image data are scene-referred raw data or not. In the present embodiment, the image data are scene-referred raw data in the case of scRGB and Raw data. When the image data are other than the scene-referred raw data (step #402; No), the flow moves to step #403 to set default appearance parameter, and the present processing is terminated. Contents of the default appearance parameter will be explained in detail later. When the image data are judged to be the scene-referred raw data in step #402 (step #402; Yes), the flow moves to step #404. In the step #404, a judgment is made whether Exif information exists in the image data or not, and when the Exif information does not exist (step #404; No), the flow moves to step #410 to set an appearance parameter for a default digital camera to terminate the present processing. The appearance parameter for a default digital camera to be set will also be explained in detail later. When the Exif information exists, in step #404 (step #404; Yes), the flow moves to step #405 to calculate average luminance $L_A$ of an adapting field area and relative luminance Yb of a background area. With respect to $L_A$, in this case, luminance information recorded is read to be transformed through the following expression from Bv value by APEX system to luminance value $L_A$ in cd/m$^2$.

(Numeral 8)

$$L_A = 2^{BV} \cdot K \cdot N$$

K: calibration constant of exposure meter (= 14)
N: constant (= 0.3)

Incidentally, even when the luminance value is not recorded directly, if Tv value, Av value and Sv value representing APEX values of a shutter speed value, an aperture value and an ISO speed value are recorded, Bv value can be calculated by the following expression, thus, it is also possible to obtain luminance $L_A$ from the Bv value thus obtained.

(Numeral 9)

$$Bv = Tv + Av - Sv$$

A value of Yb is set by the following expression, after calculating average luminance value Bvc of a pixel belonging to view angle 2° whose center is AF focusing point of image data and average luminance Bvb of a pixel belonging to an area of view angle 10°, based on AF focusing point information recorded by digital camera 2. Incidentally, in each of the area of view angle 2° and the area of view angle 10°, a field angle is obtained from a size of the sensor used and from a focal length of the lens in the course of photographing, and thereby, the relationship between the field angle and the number of pixels can be decided.

(Numeral 10)

$$Yb = 2^{Bvb} / 2^{Bvc} \times 0.18 \times 100$$

When Yb exceeds 100, however, the value is limited to 100. Although the area with view angle 2° whose center is AF focusing point and the area with view angle 10° whose center is AF focusing point are referred to in this case here, there is also an occasion where an area with view angle of more than 2° whose center is AF focusing point is looked in actual photographed-scene, and for example, there are considered a method to detect a subject of a person, and thereby to obtain Yb from a ratio of the person area to its peripheral area and a method to use fixed value Yb = 18, because the reflectance of the average scene is 18%.

Then, in step #406, colorimetric values Xw, Yw and Zw of a white color of the adapting field area are calculated. Chromaticity values x and y of the light source are obtained by referring to a conversion table from light source information recorded in Exif information, and Xw, Yw and Zw are established in accordance with the following expressions.

(Numeral 11)

$$Xw = x \times 90/y$$

$$Yw = 90$$

$$Zw = (1 - x - y) \times 90/y$$

Incidentally, in the same way as in appearance model parameter calculating section 216 of digital camera 2, it is also possible to record values of white balance gain on the image file, and thereby to obtain color temperatures to set them to Xw, Yw and Zw.

Next, in step #407, contrast of a peripheral area is calculated. The peripheral area in this case means an area that is outside the background area obtained in step #003. Therefore, an area with view angle 2° whose center is AF focusing point is obtained first in the same way as in step #003, and average luminance value Bvs of an area that belongs to the outside of the aforesaid area in an image area is calculated. Based on a difference between Bvs and Bvc obtained in step #405, there are determined appearance parameters including c, Nc, $F_{LL}$ and F. With respect to these parameters, values shown in Fig. 21 are recommended depending on conditions of the peripheral area, for CIECAM97s. Accordingly, the conditions are judged as follows based on a difference between Bvc and Bvs, and appearance parameters are established in accordance with contents shown in Fig. 21.

(Numeral 12)

Bvs - Bvc < 0     Average peripheral area

Bvs - Bvc > 2.7     Dark peripheral area

Otherwise     Dim peripheral area

Though the values stated above are used as boundaries to divide the conditions in this case, it is also possible to use a method to interpolate (Bvs - Bvc) values in the values shown in Fig. 21.

Next, in step #408, a flag of person is judged whether it is set or not, and when it is set (step #408; Yes), the flow moves to step #409 wherein the appearance parameter for a person calculated to lower image contrast is corrected. Contents of this correction is assumed to correct the value of $L_A$ to one fourth of the set value, which is the same as in the appearance model parameter calculating section 216 in the digital camera 2 explained above. When the flag of person is not set (step #408; No), the present processing is terminated.

In setting of a default appearance parameter conducted in step #403, an appearance parameter in the case of observing sRGB monitor under an ordinary indoor environment is set. As $L_A$, 80 cd/m² is set. With respect to Yb, an average reflectance is represented by Yb = 18. With respect to Xw, Yw and Zw, Xw = 95.04, Yw = 100.0 and Zw = 108.89 are set as values of CIE illuminant D65 representing a white color of sRGB monitor. For c, Nc and $F_{LL}$, values for "average peripheral area" are set.

For setting of an appearance parameter for a default digital camera conducted in step #410, the following values are set. As $L_A$, 2150 cd/m$^2$ is set under the assumption that a photographed-scene is an outdoor scene in daytime for which a frequency is usually the highest. With respect to Yb, an average reflectance is represented by Yb = 18. With respect to Xw, Yw and Zw, values representing 90% of CIE illuminant D55, namely, Xw = 86.11, Yw = 90.0 and Zw = 82.93 are set as average values in daytime. For c, Nc and $F_{LL}$, values for "average peripheral area" are set.

Referring to Fig. 11, CAM forward transform processing based on a color appearance model by CAM forward transform module 101 will be explained in detail, next. In the present embodiment, an example wherein CIECAM97s was used as a color appearance model will be explained, first.

Those necessary as input data to the appearance model are the following data.

. Tristimulus values X, Y and Z of a color whose appearance needs to be estimated
. Viewing condition parameter concerning input image

Tristimulus values Xw, Yw and Zw of a white color in an adapting field area
Average luminance of an adapting field area LA
Relative luminance of a background area Yb
Constants determined by conditions of peripheral areas c, Nc, $F_{LL}$ and F

In step #501, RGB values of each pixel of input image data are transformed into tristimulus values X, Y and Z.

$$(\text{Numeral } 13)$$

$$\begin{pmatrix} R' \\ G' \\ B' \end{pmatrix} = \begin{pmatrix} (R \div 8192.0) - 0.5 \\ (G \div 8192.0) - 0.5 \\ (B \div 8192.0) - 0.5 \end{pmatrix}$$

$$\begin{pmatrix} X \\ Y \\ Z \end{pmatrix} = \begin{pmatrix} 0.4124 & 0.3576 & 0.1805 \\ 0.2126 & 0.7152 & 0.0722 \\ 0.0193 & 0.1192 & 0.9505 \end{pmatrix} \begin{pmatrix} R' \\ G' \\ B' \end{pmatrix}$$

In the case of sRGB, the following expressions are used.

$$(\text{Numeral } 14)$$

$$R_{sRGB} = R/255$$

$$G_{sRGB} = G/255$$

$$B_{sRGB} = B/255$$

$$\text{if } R_{sRGB}, G_{sRGB}, B_{sRGB} \leq 0.04045$$

$$R' = R_{sRGB} / 12.92$$

$$G' = G_{sRGB} / 12.92$$

$$B' = B_{sRGB} / 12.92$$

$$\text{otherwise}$$

$$R' = [(R_{sRGB} + 0.055) / 1.055]^{2.4}$$

$$G' = [(G_{sRGB} + 0.055) / 1.055]^{2.4}$$

$$B' = [(B_{sRGB} + 0.055) / 1.055]^{2.4}$$

$$\begin{pmatrix} X \\ Y \\ Z \end{pmatrix} = \begin{pmatrix} 0.4124 & 0.3576 & 0.1805 \\ 0.2126 & 0.7152 & 0.0722 \\ 0.0193 & 0.1192 & 0.9505 \end{pmatrix} \begin{pmatrix} R' \\ G' \\ B' \end{pmatrix}$$

Further, in the case of Raw data, they are transformed by the use of digital camera ICC profile 21 in which characteristics of digital camera 2 are described. To be concrete, transform identical to the foregoing is carried out by the use of 3 x 3 matrix information described in the digital camera ICC profile 21.

Next, in step #502, the following values used in the calculation later are calculated from the established appearance parameter.

(Numeral 15)

$$k = \frac{1}{5 \cdot L_A + 1}$$

$$F_L = 0.2 \cdot k^4 \cdot (5 - L_A) + 0.(1 \cdot k^4)^2 \cdot (5 - L_A)^{\frac{1}{3}}$$

$$n = \frac{Yb}{Yw}$$

$$N_{bb} = N_{cb} = 0.725 \cdot \left(\frac{1}{n}\right)^{0.2}$$

$$Z = 1 + F_{LL} \cdot n^{1/2}$$

Next, in step #503, chromatic adaptation transform is carried out for image data. The chromatic adaptation transform is one wherein chromatic adaptation transform of a von Kries-type has been improved and a degree of adaptation for a white color under the viewing condition is considered. First, X, Y and Z are transformed into

(Numeral 16)

$$\bar{R}, \bar{G}, \bar{B}$$

by the following expressions (hereinafter referred to as R1, G1 and B1 respectively in the text).

(Numeral 17)

$$\begin{pmatrix} \bar{R} \\ \bar{G} \\ \bar{B} \end{pmatrix} = M_B \cdot \begin{pmatrix} X/Y \\ Y/Y \\ Z/Y \end{pmatrix}$$

In this case, the following is used as transform matrix $M_B$.

(Numeral 18)

$$M_B = \begin{pmatrix} 0.8951 & 0.2664 & -0.1614 \\ -0.7502 & 1.7135 & 0.0367 \\ 0.0389 & 0.0685 & 1.0296 \end{pmatrix}$$

Responses Rc, Gc and Bc which have been subjected to chromatic adaptation transform by the following expression are calculated from R1, G1 and B1 transformed in the aforesaid way.

(Numeral 19)

$$Rc = \left[ \frac{D}{Rw} + (1-D) \right] \cdot \overline{R}$$

$$Gc = \left[ \frac{D}{Gw} + (1-D) \right] \cdot \overline{G}$$

$$Bc = \left[ \frac{D}{Bw^P} + (1-D) \right] \cdot \left| \overline{B} \right|^P$$

$$p = BW^{0.0834}$$

$$D = F - F \bigg/ \left[ 1 + 2(L_A^{1/4}) + (L_A^2)/300 \right]$$

In the expressions above, Rw, Gw and Bw are those wherein tristimulus values of adaptation white color are transformed by matrix $M_B$.

Subsequently, in step #504, image data which have been subjected to chromatic adaptation processing are transformed into cone responses R', G' and B' which correspond to human visual system sensors. First, inverse transform of the transform by the matrix stated above is carried out, and then, 3 x 3 matrix called as Hunt-Pointer-Estevez is applied.

(Numeral 20)

$$\begin{pmatrix} R' \\ G' \\ B' \end{pmatrix} = M_{HPE} \cdot M_B^{-1} \begin{pmatrix} Rc \cdot Y \\ Gc \cdot Y \\ Bc \cdot Y \end{pmatrix}$$

$$M_B^{-1} = \begin{pmatrix} 0.9870 & -0.1471 & 0.1600 \\ 0.4323 & 0.5184 & 0.0493 \\ -0.0085 & 0.0400 & 0.9685 \end{pmatrix}$$

$$M_{HPE} = \begin{pmatrix} 0.38971 & 0.68898 & -0.07868 \\ -0.22981 & 1.18340 & 0.04641 \\ 0 & 0 & 1 \end{pmatrix}$$

Subsequently, in step #505, image data which have been transformed into cone responses are subjected to the following transform corresponding to non-linear response of a human visual system.

(Numeral 21)

$$Ra' = \frac{40 \cdot \left( F_L \cdot R' \middle/ 100 \right)^{0.73}}{\left[ \left( F_L \cdot R' \middle/ 100 \right)^{0.73} + 2 \right]} + 1$$

$$Ga' = \frac{40 \cdot \left( F_L \cdot G' \middle/ 100 \right)^{0.73}}{\left[ \left( F_L \cdot G' \middle/ 100 \right)^{0.73} + 2 \right]} + 1$$

$$Ba' = \frac{40 \cdot \left( F_L \cdot B' \middle/ 100 \right)^{0.73}}{\left[ \left( F_L \cdot B' \middle/ 100 \right)^{0.73} + 2 \right]} + 1$$

Finally, in step #506, numerical values estimating color appearance, hue angle: h, lightness: J and chroma: C are calculated respectively based on the following expressions.

(Numeral 22)

$$h = \tan^{-1}(b/a)$$

$$a = Ra' - 12 \cdot Ga'/11 + Ba'/11$$

$$b = (1/9) \cdot (Ra' + Ga' - 2.Ba')$$

$$J = 100 \cdot (A/Aw)^{c't}$$

$$A = [2 \cdot Ra' + Ga' + (1/20) \cdot Ba' - 0.305] \cdot N_{hb}$$

(Aw is calculated from Ra', Ga' and Ba' which are obtained by transforming Xw, Yw and Zw in the same way)

$$C = 2.44 \cdot s^{0.69} (J/100)^{0.67n} (1.64 - 0.29^n)$$

$$s = \frac{50 \cdot (a^2 + b^2)^{1/2} 100 \cdot e \cdot (10/13) Nc \cdot Ncb}{Ra' + Ga' + (21/20) \cdot Ba'}$$

$$e = e_1 + (e_2 - e_1)(h - h_1) / (h_2 - h_1)$$

With respect to h1, h2, e1 and e2, they are retrieved from the following table. In the case of $h < h_1$, h' is made

to be h + 360, and in other cases, h' is made to be h, then, i satisfying hi $\leq$ h' < $h_{i+1}$ is obtained, and is used as $h_1 = h_i$, $h_2 = h_{i+1}$, $e_1 = e_i$ and $e_2 = e_{i+1}$.

Table 1

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |
| $H_i$ | 0.0 | 100.0 | 200.0 | 300.0 | 400.0 |

When CIECAM02 is used as a color appearance model, processing in step #502 and thereafter are changed as follow.

Namely, in step #502, the following values used in calculation later are calculated from the established appearance parameter.

(Numeral 23)

$$k = \frac{1}{5 \cdot L_A + 1}$$

$$F_L = 0.2 . k^4 \cdot (5.L_A) + 0.1 \cdot (1-k^4)^2 \cdot (5 \cdot L_A)^{\frac{1}{3}}$$

$$n = \frac{Yb}{Yw}$$

$$N_{bb} = N_{cb} = 0.725 \cdot \left(\frac{1}{n}\right)^{0.2}$$

$$z = 1.48 + \sqrt{n}$$

Subsequently, in step #503, chromatic adaptation transform is conducted for image data. The chromatic adaptation transform is one wherein chromatic adaptation transform of a von Kries-type has been improved and a degree of adaptation for a white color under the viewing condition is considered. First, X, Y and Z are transformed by the following expressions into R1, G1 and B1 respectively.

(Numeral 24)

$$\begin{pmatrix} \overline{R} \\ \overline{G} \\ \overline{B} \end{pmatrix} = M_{CAT02} \cdot \begin{pmatrix} X \\ Y \\ Z \end{pmatrix}$$

Here, the following expression is used as transform matrix $M_{CAT02}$.

(Numeral 25)

$$M_{CAT02} = \begin{pmatrix} 0.7328 & 0.4296 & -0.1624 \\ -0.7036 & 1.6975 & 0.0061 \\ 0.0030 & 0.0136 & 0.9834 \end{pmatrix}$$

Responses Rc, Gc and Bc which have been subjected to chromatic adaptation transform by the following expression are calculated from R1, G1 and B1 transformed in the aforesaid way.

(Numeral 26)

$$Rc = \left[ Yw \cdot \frac{D}{Rw} + (1-D) \right] \cdot \overline{R}$$

$$Gc = \left[ Yw \cdot \frac{D}{Gw} + (1-D) \right] \cdot \overline{G}$$

$$Bc = \left[ Yw \cdot \frac{D}{Bw} + (1-D) \right] \cdot \overline{B}$$

$$D = F \left[ 1 - \left( \frac{1}{3.6} \right) e^{\frac{-L_A - 42}{92}} \right]$$

(e represents a base of natural logarithm)

Here, Rw, Gw and Bw are those wherein tristimulus values of adaptation white color are transformed by matrix $M_{CAT02}$.

Next, in step #504, image data which have been subjected to chromatic adaptation processing are transformed into cone responses R', G' and B' which correspond to human visual system sensors. First, inverse transform of the transform by the matrix stated above is carried out, and then, 3 x 3 matrix called as Hunt-Pointer-Estevez is applied.

(Numeral 27)

$$\begin{pmatrix} R' \\ G' \\ B' \end{pmatrix} = M_{HPE} \cdot M_{CAT02}^{-1} \begin{pmatrix} Rc \\ Gc \\ Bc \end{pmatrix}$$

$$M_{CAT02}^{-1} = \begin{pmatrix} 1.096124 & -0.278869 & 0.182745 \\ 0.454369 & 0.473533 & 0.072098 \\ -0.009268 & -0.005698 & 1.015326 \end{pmatrix}$$

$$M_{HPE} = \begin{pmatrix} 0.38971 & 0.68898 & -0.07868 \\ -0.22981 & 1.18340 & 0.04641 \\ 0 & 0 & 1 \end{pmatrix}$$

Next, in step #505, image data which have been transformed into cone responses are subjected to the following transform corresponding to non-linear response of a human visual system.

(Numeral 28)

$$Ra' = \frac{400 \cdot \left( F_L \cdot R'\big/100 \right)^{0.42}}{27.13 + \left( F_L \cdot R'\big/100 \right)^{0.42}} + 0.1$$

$$Ga' = \frac{400 \cdot \left( F_L \cdot G'\big/100 \right)^{0.42}}{27.13 + \left( F_L \cdot G'\big/100 \right)^{0.42}} + 0.1$$

$$Ba' = \frac{400 \cdot \left( F_L \cdot B'\big/100 \right)^{0.42}}{27.13 + \left( F_L \cdot B'\big/100 \right)^{0.42}} + 0.1$$

Finally, in step #506, numerical values estimating color appearance, hue angle: h, lightness: J and chroma: C are calculated respectively based on the following expressions.

(Numeral 29)

$$h = \tan^{-1}\left( b\big/a \right)$$

$$a = Ra' - 12 \cdot Ga'\big/11 + Ba'\big/11$$

$$b = \left( 1\big/9 \right) \cdot \left( Ra' + Ga' - 2 \cdot Ba' \right)$$

$$J = 100 \cdot \left( A\big/Aw \right)^{cz}$$

$$A = \left[ 2 \cdot Ra' + Ga' + (1/20) \cdot Ba' - 0.305 \right] \cdot N_{bb}$$

(Aw is calculated from Ra', Ga' and Ba' which are obtained by transforming Xw, Yw and Zw in the same way)

$$C = t^{0.9} \cdot \sqrt{J\big/100} \cdot (1.64 - 0.29^n)^{0.73}$$

$$t = \frac{e_1 \cdot (a^2 + b^2)^{\frac{1}{2}}}{Ra' + Ga' + (21/20) \cdot Ba'}$$

$$e_1 = \left( \frac{12500}{13} \cdot Nc \cdot Ncb \right) \cdot \left[ \cos\left( h \cdot \frac{\pi}{180} + 2 \right) + 3.8 \right]$$

Through the transform mentioned above, RGB values result in values of J, C and h showing "color appearance".

Subsequently, referring to Figs. 12 and 13, contents of processing relating to gamut mapping module 105 will be explained in detail.

The most simple method as a gamut mapping method is a clipping method which maps chromaticity points which are present outside a color area capable of being recorded onto a boundary of nearest color areas. In this method, however, tone on the outside of the color area lacks detail, resulting in an image that gives a sense of discomfort in appreciation. The present example, therefore, employs non-linear compression wherein chromaticity points in the area where the chroma is higher than an appropriate threshold value are compressed smoothly depending on a size of chroma. Namely, in the area where chroma value is not less than threshold value: Cth, the compression shown in Fig. 12 is conducted by the use of chroma value: C calculated by the color appearance model (For details about a method of color area mapping, see, for example, page 447 of "Fine Imaging and Digital Photography" of Corona Co. edited by Publishing Committee of The Society of Photographic Science and Technology of Japan).

First, in step #601, respective colorimetric values $X_{in}(i)$, $Y_{in}(i)$ and $Z_{in}(i)$ are calculated (i = R, G, B, C, M and Y) for main six primary colors of R, G, B, C, M and Y in a color space on the input side. In other words, for 8 bit data, for example, values of R, G and B are calculated successively under the condition that 255, 0 and 0 are for R, and 0, 255 and 0 are for G. For the transform to a colorimetric value, the method explained in step #501 for transform by the color appearance model is used.

Further, in step #602, chroma values: Cin (i) (i = R, G, B, C, M and Y) are calculated from the calculated XYZ values, by the use of the color appearance model.

Next, in step #603, respective colorimetric values $X_{out}(i)$, $Y_{out}(i)$ and $Z_{out}(i)$ are calculated (i = R, G, B, C, M and Y) for main six primary colors of R, G, B, C, M and Y in a color space of output device, in the same way. For transform into colorimetric values, monitor ICC profile 31 and printer ICC profile 41 are used as a parameter for gamut mapping (color area mapping). With respect to ordinary ICC profile, when a method of transform is described in a multidimensional look up table system, a gamut mapping table is prepared in the case of making a profile. In the present example, however, when preparing a profile, there is used an exclusive profile wherein there are written data which make is possible to judge without compression that output device is out of gamut.

Further, in step #604, chroma value: Cout (i) is calculated from the calculated XYZ values, in the same way as in step #602 (i = R, G, B, C, M and Y).

Next, in step #605, a value of k is calculated from the minimum value of Cout (i)/Cin (i) through the following expression. Further, a color for which the value of k has been calculated is stored in a memory such as RAM as mincolor.

(Numeral 30)

$$k = Min\left( {C_{out}(i)} \middle/ {C_{in}(i)} \right), i = R, G, B, C, M, Y$$

However, in the case of k > 1, k is restricted to k = 1.

Next, in step #606, a counting value used for counting pixels is reset.

Next, in step #607, a value of chroma: C of each pixel transformed into JCh is transformed to value C' compressed by the following expression. Threshold value Cth at which the compression is started is made to be 80% of the value of k, which is calculated by the following expression.

(Numeral 31)

Cth = k x 0.8

```
if C < Cth
    C' = C
  otherwise
```

$$C' = \frac{C_{out}(\min color)}{\left[C_{in}(\min color - Cth)\right]^{0.5}} \cdot (C - Cth)^{0.5}$$

Subsequently, in step #608, a pixel count value is compared with the total value of pixels to judge whether processing for all pixels has been terminated or not. When the processing for all pixels has been terminated (step #608; Yes), the then processing is terminated. When the processing for all pixels has not been terminated (step #608; No), the flow goes back to step #607 to repeat the treatments of the steps #607 and #608.

Incidentally, the gamut mapping method includes many methods in addition to one explained in the present specification, and many of them can be used.

Referring to the flow chart shown in Fig. 14, CAM inverse transform based on a color appearance model by CAM inverse transform module 106 will be explained in detail, next.

First, in step #701, the following variables are calculated from the second appearance parameters relating to output images Xw', Yw', Zw', $L_A$', Yb', c', Nc', $F_{LL}$' and F'.

(Numeral 32)

$$k' = \frac{1}{5 \cdot L_A' + 1}$$

$$F_L' = 0.2 \cdot k'^4 \cdot (5 \cdot L_A') + 0.1 \cdot (1 - k'^4)^2 \cdot (5 - L_A')^{\frac{1}{3}}$$

$$n' = \frac{Y_b'}{Y_w'}$$

$$N_{bb}' = N_{cb}' = 0.725 \cdot \left(\frac{1}{n'}\right)^{0.2}$$

$$z' = 1 + F_{LL}' \cdot n'^{1/2}$$

Further, Aw' is calculated by applying operations in step #503 - #506 in Fig. 11 to Xw', Yw' and Zw'.

Subsequently, in step #702, non-linear response values Ra', Ga' and Ba' are calculated from parameters J', C' and h representing a color appearance. First, A and s are obtained by the following expression from J' and C'.

(Numeral 33)

$$A = Aw' \cdot (J'/100)^{1/c'z'}$$

$$s = C'^{1/069} / \left[2.44 \cdot (J'/100)^{0.67n'} (1.64 - 0.29^{n'})\right]^{1/0.69}$$

Next, a and b are obtained by the following expression.

(Numeral 34)

$$a = \frac{s \cdot \left(A/N_{bb}{}' + 2.05\right)}{\left\{\left[1 - \tan^2(h)\right]^{1/2}\left[50000 \cdot e \cdot Nc' \cdot Ncb'/13\right] + s\left[11/23 + (108/23) \cdot \tan(h)\right]\right\}}$$

$$b = a \cdot \tan(h)$$

Here, in the calculation of $[1 + \tan^2(h)]^{1/2}$, the signs of the results are as follows depending on the value of h.

$$0 \le h < 90 \qquad [1 + \tan^2(h)]^{1/2}$$

$$90 \le h < 270 \qquad -[1 + \tan^2(h)]^{1/2}$$

$$270 \le h < 360 \qquad [1 + \tan^2(h)]^{1/2}$$

further,

$$e = e_1 + (e_2 - e_1 (h - h_1) / (h2 - h_1)$$

With respect to h1, h2, e1 and e2, they are retrieved from the following table. In the case of $h < h_1$, h' is made to be h + 360, and in other cases, h' is made to be h, then, i satisfying $hi \le h' < h_{i+1}$ is obtained, and is used as $h_1 = h_i$, $h_2 = h_{i+1}$, $e_1 = e_i$ and $e_2 = e_{i+1}$.

Table 2

| i | 1 | 2 | 3 | 4 | 5 |
|---|---|---|---|---|---|
| hi | 20.14 | 90.00 | 164.25 | 237.53 | 380.14 |
| $e_i$ | 0.8 | 0.7 | 1.0 | 1.2 | 0.8 |

Ra', Ga' and Ba' are calculated from the following expressions.

(Numeral 35)

$$Ra' = (20/61) \cdot (A/N_{bb}' + 2.05) + (41/61) \cdot (11/23) \cdot a +$$

$$(288/61) \cdot (1/23) \cdot b$$

$$Ga' = (20/61) \cdot (A/N_{bb}' + 2.05) - (81/61) \cdot (11/23) \cdot a -$$

$$(261/61) \cdot (1/23) \cdot b$$

$$Ba' = (20/61) \cdot (A/N_{bb}' + 2.05) - (20/61) \cdot (11/23) \cdot a -$$

$$(20/61) \cdot (315/23) \cdot b$$

Next, in step #703, non-linear response values Ra', Ga' and Ba' are subjected to inverse transform, to obtain cone responses R', G' and B'.

(Numeral 36)

$$R' = 100 \cdot [(2.Ra' - 2) / (41 - Ra')]^{1/0.73}$$

$$G' = 100 \cdot [(2 - Ga' - 2) / (41 - Ga')]^{1/0.73}$$

$$B' = 100 \cdot [(2 \cdot Ba' - 2) / (41 - Ba')]^{1/0.73}$$

Here, in the case of Ra' - 1 < 0, the following expression is used. The same is true also for Ga' and Ba'.

(Numeral 37)

$$R' = -100 \cdot [(2 - 2.Ra') / (39 - Ra')]^{1/0.73}$$

Further, in step #704, cone responses are subjected to inverse transform, and Rc·Y, Gc·Y and Bc·Y (hereinafter referred to simply as RcY, GcY and BcY) are calculated.

(Numeral 38)

$$\begin{pmatrix} RcY \\ GcY \\ BcY \end{pmatrix} = M_B \cdot M_{HPE}^{-1} \begin{pmatrix} R' \\ G' \\ B' \end{pmatrix}$$

$$M_{HPE} = \begin{pmatrix} 1.91019 & -1.11214 & 0.20195 \\ 0.37095 & 0.62905 & 0 \\ 0 & 0 & 1 \end{pmatrix}$$

Next, in step #705, chromatic adaptation inverse transform is carried out to return to colorimetric values. The following expression is used to calculate Yc, first.

(Numeral 39)

$$Yc = 0.43231 \cdot RcY + 0.51836 \cdot GcY + 0.04929 \cdot BcY$$

Then, the following expression is used to calculate (Y/Yc) R, (Y/Yc) G and $(Y/Yc)^{1/P}$B.

(Numeral 40)

$$(Y/Yc)R = (Y/Yc) RC/ [D (1/Rw) + 1 - D]$$

$$(Y/Yc)G = (Y/Yc) Gc/ [D (1/Gw) + 1 - D]$$

$$(Y/Yc)^{1/P}B = [|(Y/Yc) Bc |]^{1/P} / [D (1/]Bw^P) + 1 - D]^{1/P}$$

Here, in the case of (Y/Yc) < 0, a value of $(Y/Yc)^{1/P}$B is made to be negative.
Then, Y' is calculated by the following expression.

(Numeral 41)

$$Y' = 0.43231 \cdot YR + 0.51836 \cdot YG + 0.04929 \cdot (Y/Yc)^{1/P}Byc$$

Here, tristimulus values X", Y" and Z" are calculated by the following expression.

(Numeral 42)

$$\begin{pmatrix} X'' \\ Y'' \\ Z'' \end{pmatrix} = M^{-1} \begin{pmatrix} Yc(Y/Yc)R \\ Yc(Y/Yc)G \\ Yc(Y/Yc)^{1/p}B/Yc(Y'/Yc)^{(1/p-1)} \end{pmatrix}$$

Through the foregoing, tristimulus values X", Y" and Z" of the colors corresponding to the appearance specified in the environment are calculated from the value indicating the color appearance and from the second viewing environment parameters.

This value is outputted after being transformed into color space of an output equipment, in step #706. Specifically, 3 x 3 matrix information described in monitor ICC profile 31 and printer ICC profile 41 in which the characteristics of the monitor 3 and printer 4 are respectively described is used, or the three-dimensional look up table is used, to transform.

Further, the contents of processing shown below are for the CAM inverse transform in the case of using CIECAM02 as a color appearance model.

First, in step #701, the following variables are calculated from the second appearance parameter.

(Numeral 43)

$$k' = \frac{1}{5 \cdot L_A' + 1}$$

$$F_L' = 0.2 \cdot k'^4 \cdot (5 \cdot L_A') + 0.1 \cdot (1 - k'^4)^2 \cdot (5 \cdot L_A')^{\frac{1}{3}}$$

$$n' = \frac{Yb'}{Yw'}$$

$$N_{bb}' = N_{cb}' = 0.725 \cdot \left(\frac{1}{n'}\right)^{0.2}$$

$$z' = 1.48 + \sqrt{n'}$$

Further, operations of steps #503 - #506 relating to the CAM transform stated above are applied by using the second appearance parameter, for tristimulus values of a white color in the adapting field area, for calculating Aw'.

Next, non-linear response calculation from the color appearance value will be explained (step #702). First, the input value of hue angle h is retrieved from the following table, to obtain i that satisfies $h_i \leq h' < h_{i+1}$.

Table 3

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |
| $H_i$ | 0.0 | 100.0 | 200.0 | 300.0 | 400.0 |

The aforesaid i and the input value of the hue component H of the color appearance are used to calculate the following expression.

(Numeral 44)

$$h' = \frac{(H - H_i)(e_{i+1} \cdot h_i - e_i \cdot h_{i+1}) - 100 \cdot h_i \cdot e_{i+1}}{(H - H_i)(e_{i+1} - e_i) - 100 \cdot e_{i+1}}$$

In the case of h' > 360 in this case, the value is one wherein 360 is subtracted.

Next, C' representing chroma of a color appearance and an input value of J' representing lightness are used to calculate the following variables.

(Numeral 45)

$$t = \left( \frac{C'}{\sqrt{J'/100}\,(1.64 - 0.29^{n'})^{0.73}} \right)^{\frac{1}{0.9}}$$

$$e = \left( \frac{12500}{13} \cdot Nc' \cdot Ncb' \right) \left( \cos\left( h'\frac{\pi}{180} + 2 \right) + 3.8 \right)$$

$$A = Aw' \left( J'/100 \right)^{\frac{1}{c' \cdot z'}}$$

$$p_1 = e/t$$

$$p_2 = \left( A/Nbb' \right) + 0.305$$

$$p_3 = 21/20$$

$$h_r = h'\frac{\pi}{180}$$

Next, when

(Numeral 46)

$$|\sin(h_r)| \geq |\cos(h_r)|$$

is satisfied,, the following expressions are calculated.

(Numeral 47)

$$p_4 = {p_1} \big/ {\sin(h_r)}$$

$$b = \frac{p_2(2 + p_3)\left(460 \big/ 1403\right)}{p_4 + (2 + p_3)\left(220 \big/ 1403\right)\left(\cos(h_r) \big/ \sin(h_r)\right) - \left(27 \big/ 1403\right) + p_3\left(6300 \big/ 1403\right)}$$

$$a = b\left(\cos(h_r) \big/ \sin(h_r)\right)$$

Further, when

(Numeral 48)

$$|\sin(h_r)| < |\cos(h_r)|$$

is satisfied, the following expressions are calculated.

(Numeral 49)

$$p_5 = {p_1} \big/ {\cos(h_r)}$$

$$a = \frac{p_2(2 + p_3)\left(460 \big/ 1403\right)}{p_5 + (2 + p_3)\left(220 \big/ 1403\right) - \left(\left(27 \big/ 1403\right) - p_3\left(6300 \big/ 1403\right)\right)\left(\sin(h_r) \big/ \cos(h_r)\right)}$$

$$b = a\left(\sin(h_r) \big/ \cos(h_r)\right)$$

Then, the followings are calculated.

(Numeral 50)

$$Ra' = \frac{460}{1403}p_2 + \frac{451}{1403}a + \frac{288}{1403}b$$

$$Ga' = \frac{460}{1403}p_2 + \frac{891}{1403}a + \frac{261}{1403}b$$

$$Ba' = \frac{460}{1403}p_2 + \frac{220}{1403}a + \frac{6300}{1403}b$$

Next, calculation of non-linear response inverse transform will be explained (step #703).

(Numeral 51)

$$R'= sign(Ra'\text{-}0.1) \cdot \frac{100}{F_L'} \cdot \left(\frac{27.13 \cdot |Ra'\text{-}0.1|}{400\text{-}|Ra'\text{-}0.1|}\right)^{\frac{1}{0.42}}$$

$$G'= sign(Ga'\text{-}0.1) \cdot \frac{100}{F_L'} \cdot \left(\frac{27.13 \cdot |Ga'\text{-}0.1|}{400\text{-}|Ga'\text{-}0.1|}\right)^{\frac{1}{0.42}}$$

$$B'= sign(Ba'\text{-}0.1) \cdot \frac{100}{F_L'} \cdot \left(\frac{27.13 \cdot |Ba'\text{-}0.1|}{400\text{-}|Ba'\text{-}0.1|}\right)^{\frac{1}{0.42}}$$

In this case, sin (x) is a function that takes 1, 0 and -1 respectively for x > 0, x = 0 and x < 0.

Next, calculation of cone response inverse transform will be explained (step #704).

(Numeral 52)

$$\begin{pmatrix} Rc \\ Gc \\ Bc \end{pmatrix} = \begin{pmatrix} 0.7328 & 0.4296 & -0.1624 \\ -0.7036 & 1.6975 & 0.0061 \\ 0.0030 & 0.0136 & 0.9834 \end{pmatrix} \begin{pmatrix} 1.910197 & -1.112124 & 0.201908 \\ 0.370950 & 0.629054 & 0.000008 \\ 0 & 0 & 1 \end{pmatrix} \begin{pmatrix} R' \\ G' \\ B' \end{pmatrix}$$

Next, calculation of chromatic adaptation inverse transform will be explained (step #705).

(Numeral 53)

$$R = \frac{Rc}{\left(Yw \cdot D/Rw' + 1 - D\right)}$$

$$G = \frac{Gc}{\left(Yw \cdot D/Gw' + 1 - D\right)}$$

$$B = \frac{Bc}{\left(Yw \cdot D/Bw' + 1 - D\right)}$$

$$\begin{pmatrix} X'' \\ Y'' \\ Z'' \end{pmatrix} = \begin{pmatrix} 1.096124 & -0.278869 & 0.182745 \\ 0.454369 & 0.473533 & 0.072098 \\ -0.009628 & -0.005698 & 1.015326 \end{pmatrix} \begin{pmatrix} R \\ G \\ B \end{pmatrix}$$

Incidentally, in addition to the CIECAM97s and CIECAM02 used in the present embodiment, there have been published Naya model, Hunt model, RLab model and LLab model which can also be used in place of the CIECAM97s and CIECAM02.

As explained above, image processing apparatus 10 conducts application software 1 and thereby judges whether an appearance parameter is related to the inputted scene-referred raw data or not, and when the appearance parameter is related, the image processing apparatus 10 conducts image transform (CAM forward transform, CAM inverse transform) for the scene-referred raw data based on the appearance parameter, with CAM forward transform module 104 and CAM inverse transform module 106.

Further, the image processing apparatus 10 conducts application software 1 and thereby judges whether information (Exif information) indicating a photographed-scene is related to the inputted scene-referred raw data or not, and when the information is related, the image processing apparatus 10 specifies the photographed-scene based on the information with photographing data analysis module 102, then, further calculates an appearance parameter based on the specified photographed-scene with appearance parameter calculating module 103 and further conducts image transform (CAM forward transform, CAM inverse transform) for the scene-referred raw data based on the calculated appearance parameter, with CAM forward transform module 104 and CAM inverse transform module 106.

Further, the image processing apparatus 10 conducts application software 1 and thereby specifies the photographed-scene based on the inputted scene-referred raw data with scene analysis module 101, then, further calculates an appearance parameter based on the photographed-scene with appearance parameter calculating module 103 and further conducts image transform (CAM forward transform, CAM inverse transform) for the scene-referred raw data based on the calculated appearance parameter, with CAM forward transform module 104 and CAM inverse transform module 106.

Therefore, for the inputted scene-referred raw data, the appearance parameter can be calculated from either one of information (Exif information) to be inputted after being related in advance to the scene-referred raw data, or indicating photographed-scene to be inputted after being related in advance to the scene-referred raw data, and information indicating photographed-scene to be specified based on the scene-referred raw data. Therefore, it is possible to conduct image transform based on color appearance model, by using the appearance parameter. Accordingly, even when image data having luminance that is proportional to luminance of photographed-scene like the scene-referred raw data are inputted, image transform based on the appearance parameter can always be conducted, thus, appropriate image data for output can be constantly prepared.

A description in the present embodiment is one showing an example of an image pickup apparatus such as a digital camera outputting image data relating to the invention, an image data output method and an image data output program, and an example of an image processing apparatus conducting image transform for outputting the outputted image data on an output device such as a monitor and a printer, an image processing method and an image processing program, to which, however, the invention is not limited. Detailed structures and detailed operations of image processing apparatus 10 and digital camera 2 in the present embodiment can be varied without departing from the spirit and scope of the invention.

**Claims**

1. An image processing apparatus for applying an image transform to an inputted scene referred raw datum based on a color appearance model, the image processing apparatus comprising:

   an image transform parameter calculating section for determining an image transform parameter of the color appearance model, based on the scene referred raw data or information related to the scene referred raw data, and
   an image transform section for applying the image transform based on the color appearance model to the scene referred raw datum using the determined image transform parameter.

2. The image processing apparatus of claim 1,
   wherein the image transform parameter calculating section judges whether information representing a photographed-scene type is related to the scene referred raw datum, and
   when the information is related to the scene referred raw datum, the image transform parameter calculating section determines the photographed-scene type based on the information and calculates the image transform parameter of the color appearance model based on the photographed-scene type.

3. The image processing apparatus of claim 1, further comprising:

   a photographing data analyzing section for determining the photographed-scene type using a photographing condition related to the scene referred raw datum,

   wherein the image transform parameter calculating section determines the photographed-scene type based on the determined photographed-scene type and calculates the image transform parameter of the color appearance model based on the photographed-scene type.

4. The image processing apparatus of claim 1,
   wherein the image transform section judges whether the image transform parameter of the color appearance model is related to the scene referred raw datum, and
   when the image transform parameter is related to the scene referred raw datum, the image transform section applies the image transform to the scene referred raw datum using the image transform parameter.

5. The image processing apparatus of claim 1,
   wherein the information related to the scene referred raw datum is information representing a photographed-scene type and/or information relating to the photographing condition and the information is added to the tag information area of the scene referred raw datum as meta information.

6. The image processing apparatus of claim 1, further comprising:

   a scene analyzing section for determining a photographed-scene type based on the scene referred raw datum,

   wherein the image transform parameter calculating section determines the image transform parameter of the color appearance model based on the photographed-scene type.

7. The image processing apparatus of claim 6,
   wherein when the scene analyzing section determines a photographed-scene type such that a photographed scene includes a person, the image transform parameter calculating section determines the image transform parameter such that a transformed scene referred raw datum has a lower contrast than a scene referred raw datum having a scene without a person.

8. The image processing apparatus of claim 1, wherein the color appearance model is CIECAM97s.

9. The image processing apparatus of claim 1, wherein the color appearance model is CIECAM02s.

10. A image pickup apparatus for outputting a scene referred raw datum, comprising:

    an output section for outputting the scene referred raw datum related information for an image transform based on a color appearance model.

11. An image processing method for applying an image transform to an inputted scene referred raw datum based on a color appearance model, the image processing method comprising:

    an image transform parameter calculating step of determining an image transform parameter of the color appearance model, based on the scene referred raw data or information related to the scene referred raw data, an image transform step of applying the image transform based on the color appearance model to the scene referred raw datum using the determined image transform parameter.

12. The image processing method of claim 11,
    wherein the image transform parameter calculating step judges whether information representing a photographed-scene type is related to the scene referred raw datum, and
    when the information is related to the scene referred raw datum, the image transform parameter calculating step determines the photographed-scene type based on the information and calculates the image transform parameter of the color appearance model based on the photographed-scene type.

13. The image processing method of claim 11, further comprising:

    a photographing data analyzing step of determining the photographed-scene type using a photographing condition related to the scene referred raw datum,

    wherein the image transform parameter calculating step determines the photographed-scene type based on the determined photographed-scene type and calculates the image transform parameter of the color appearance model based on the photographed-scene type.

14. The image processing method of claim 11, further comprising:
    wherein the image transform step judges whether the image transform parameter of the color appearance model is related to the scene referred raw datum, and
    when the image transform parameter is related to the scene referred raw datum, the image transform step applies the image transform to the scene referred raw datum using the image transform parameter.

15. The image processing method of claim 11,

wherein the information related to the scene referred raw datum is information representing a photographed-scene type and/or information relating to the photographing condition and the information is added to the tag information area of the scene referred raw datum as meta information.

**16.** The image processing method of claim 11, further comprising:

a scene analyzing step of determining a photographed-scene type based on the scene referred raw datum,

wherein the image transform parameter calculating step determines the image transform parameter of the color appearance model based on the photographed-scene type.

**17.** The image processing method of claim 16,
wherein when the scene analyzing step determines a photographed-scene type such that a photographed scene includes a person, the image transform parameter calculating step determines the image transform parameter such that a transformed scene referred raw datum has a lower contrast than a scene referred raw datum having a scene without a person.

**18.** The image processing method of claim 11, wherein the color appearance model is CIECAM97s.

**19.** The image processing method of claim 11, wherein the color appearance model is CIECAM02s.

**20.** An image data outputting method comprising:

an output step of outputting the scene referred raw datum related information for an image transform based on a color appearance model.

**21.** An image processing program for use in a computer configuring an image processing apparatus applying an image transform to an inputted scene referred raw datum based on a color appearance model, the image processing program comprising:

an image transform parameter calculating step of determining an image transform parameter of the color appearance model, based on the scene referred raw data or information related to the scene referred raw data, an image transform step of applying the image transform based on the color appearance model to the scene referred raw datum using the determined image transform parameter.

**22.** The image processing program of claim 21,
wherein the image transform parameter calculating step judges whether information representing a photographed-scene type is related to the scene referred raw datum, and
when the information is related to the scene referred raw datum, the image transform parameter calculating step determines the photographed-scene type based on the information and calculates the image transform parameter of the color appearance model based on the photographed-scene type.

**23.** The image processing program of claim 21, further comprising:

a photographing data analyzing step of determining the photographed-scene type using a photographing condition related to the scene referred raw datum,

wherein the image transform parameter calculating step determines the photographed-scene type based on the determined photographed-scene type and calculates the image transform parameter of the color appearance model based on the photographed-scene type.

**24.** The image processing program of claim 21,
wherein the image transform step judges whether the image transform parameter of the color appearance model is related to the scene referred raw datum, and
when the image transform parameter is related to the scene referred raw datum, the image transform step applies the image transform to the scene referred raw datum using the image transform parameter.

**25.** The image processing program of claim 21,

wherein the information related to the scene referred raw datum is information representing a photographed-scene type and/or information relating to the photographing condition and the information is added to the tag information area of the scene referred raw datum as meta information.

**26.** The image processing program of claim 21, further comprising:

a scene analyzing step of determining a photographed-scene type based on the scene referred raw datum,

wherein the image transform parameter calculating step determines the image transform parameter of the color appearance model based on the photographed-scene type.

**27.** The image processing program of claim 26,
wherein when the scene analyzing step determines a photographed-scene type such that a photographed scene includes a person, the image transform parameter calculating step determines the image transform parameter such that a transformed scene referred raw datum has a lower contrast than a scene referred raw datum having a scene without a person.

**28.** The image processing program of claim 21, wherein the color appearance model is CIECAM97s.

**29.** The image processing program of claim 21, wherein the color appearance model is CIECAM02s.

**30.** An image outputting program for use in a computer configuring an image processing apparatus applying an image transform to an inputted scene referred raw datum based on a color appearance model, the image outputting program, comprising:

an output step of outputting the scene referred raw datum related information for an image transform based on a color appearance model.

# FIG. 1

# FIG. 2

OPTICAL SYSTEM 202

IMAGING SENSOR 203

IMAGE PROCESSING SECTION 208

DISPLAY SECTION 209

LENS CONTROL SECTION 207

AF OPERATION SECTION 204

WB OPERATION SECTION 205

AE OPERATION SECTION 206

RECORDING DATA PREPARING SECTION 210

RECORDING MEDIA 211

APPEARANCE MODEL PARAMETER CALCULATING SECTION 216

CPU 201

SCENE MODE SETTING KEY 212

COLOR SPACE SETTING KEY 213

RELEASE BUTTON 214

OTHER OPERATION KEY 215

2

EP 1 558 022 A2

# FIG. 3

ILLUMINATION
LIGHT SOURCE

White    Xw, Yw, Zw: TRISTIMULUS
VALUES OF ADAPTATION WHITE

X, Y, Z: TRISTIMULUS
VALUES OF SAMPLES

SURROUND

BACKGROUND

$Y_b$: BACKGROUND RELATIVE LUMINANCE

ADAPTATION
VISUAL FIELD

$L_A$: LUMINANCE OF ADAPTATION VISUAL FIEL

c    : IMPACT OF SURROUND
$N_c$ : CHROMATIC INDUCTION FACTOR
$F_{LL}$ : LIGHTNESS CONTRAST FACTOR
F   : FACTOR FOR DEGREE OF ADAPTATION

↓   OPERATION

$F_L$  : LIMINANCE-LEVEL ADAPTATION FACTOR
n    : BACKGROUND INDUCTION FACTOR
Nbb : BACKGROUND BRIGHTNESS INDUCTION FACTOR
Ncb : CHROMATIC BRAIGHTNESS INDUCTION FACTOR

# FIG. 4

```
                    ┌──────────────┐
                    │    Start     │
                    └──────────────┘
                           │
                           ▼        #001
                    ╱──────────────╲
                   ╱ SCENE-REFERRED ╲  N
                   ╲  COLOR SPACE?   ╱─────────────────┐
                    ╲──────────────╱                   │
                           │ Y                         │
                           ▼                           │
                 ┌──────────────────┐                  │
                 │  CALCULATION OF  │                  │
                 │    ADAPTATION    │── #002           │
                 │    LUMINANCE     │                  │
                 └──────────────────┘                  │
                           │                           │
                           ▼                           │
                 ┌──────────────────┐                  │
                 │  CALCULATION OF  │                  │
                 │    BACKGROUND    │── #003           │
                 │ RELATIVE LUMINANCE│                 │
                 └──────────────────┘                  │
                           │                           │
                           ▼                           │
                 ┌──────────────────┐                  │
                 │  CALCULATION OF  │── #004           │
                 │ COLORIMETRIC VALUE│                 │
                 └──────────────────┘                  │
                           │                           │
                           ▼                           │
                 ┌──────────────────┐                  │
                 │  CALCULATION OF  │                  │
                 │    PERIPHERAL    │── #005           │
                 │     CONTRAST     │                  │
                 └──────────────────┘                  │
                           │           #006            │
                           ▼                           │
                    ╱──────────────╲                   │
                   ╱  PORTRAIT MODE? ╲  N               │
                   ╲                 ╱──────────┐       │
                    ╲──────────────╱           │       │
                           │ Y                 ▼       │
                           │            ╱──────────────╲  #008
                           │           ╱ SCENERY MODE?  ╲  N
                           │           ╲                ╱─────┤
                           │            ╲──────────────╱      │
                           │                   │ Y            │
                    #007   │          #009      ▼             │
                 ┌──────────────────┐  ┌──────────────────┐   │
                 │  CORRECTION OF   │  │  CORRECTION OF   │   │
                 │   PARAMETER      │  │  PARAMETER FOR   │   │
                 │   FOR PERSON     │  │    SCENERY       │   │
                 └──────────────────┘  └──────────────────┘   │
                           │                   │              │
                           ◄───────────────────┴──────────────┘
                           ▼
                    ┌──────────────┐
                    │     End      │
                    └──────────────┘
```

# FIG. 5

EP 1 558 022 A2

# FIG. 6

```
                    ( Start )
                        │
                        ▼
              ┌──────────────────┐
              │  INITIALIZATION  │──── #101
              └──────────────────┘
                        │
                        ▼
              ┌──────────────────┐
              │  IMAGE READING   │──── #102
              └──────────────────┘
                        │ N
                        ▼            #103
                     ╱──────╲            Y
              ╱─────────────────────╲─────────────┐
              ╲  SCENE INFORMATION   ╱             │
               ╲    EXISTING?      ╱               │
                 ╲───────────────╱                 │
                        │ N                         │
                        ▼            #104           │
                     ╱──────╲            Y          │
              ╱─────────────────────╲───────┐       │
              ╲ Exif INFORMATION EXISTING? ╱│       │
                ╲───────────────────────╱  │       │
                        │ N    #105        │ #106   │
                        ▼                  ▼        │
              ┌──────────────────┐  ┌──────────────┐│
              │  SCENE ANALYSIS  │  │ PHOTOGRAPHING││
              └──────────────────┘  │ DATA ANALYSIS││
                        │           └──────────────┘│
                        │                  │        │
                        ◄──────────────────┴────────┘
                        ▼
              ┌──────────────────┐
              │  CALCULATION OF  │
              │   APPEARANCE     │──── #107
              │   PARAMETER      │
              └──────────────────┘
                        │
                        ▼
              ┌──────────────────┐
              │ APPEARANCE MODEL │──── #108
              │    TRANSFORM     │
              └──────────────────┘
                        │
                        ▼
              ┌──────────────────┐
              │  GAMUT MAPPING   │──── #109
              └──────────────────┘
                        │
                        ▼
              ┌──────────────────┐
              │ APPEARANCE MODEL │──── #110
              │ INVERSE TRANSFORM│
              └──────────────────┘
                        │
                        ▼
              ┌──────────────────┐
              │   IMAGE OUTPUT   │──── #111
              └──────────────────┘
                        │
                        ▼
                    (  End  )
```

## FIG. 7

```
                    ┌─────────────┐
                    │    Start    │
                    └──────┬──────┘
                           │
                           ▼
              ┌──────────────────────────┐
              │     CALCULATION OF       │──── #201
              │  PORTRAIT DEGREE (P)     │
              └────────────┬─────────────┘
                           │
                           ▼
              ┌──────────────────────────┐
              │     CALCULATION OF       │──── #202
              │  SCENERY DEGREE (L)      │
              └────────────┬─────────────┘
                           │          #203
                           ▼
                      ╱─────────╲      Y
                     ╱   P = L   ╲───────────────────────────────┐
                     ╲           ╱                               │
                      ╲─────────╱                                │
                           │ N       #204                        │
                           ▼                                     │
                      ╱─────────╲      N                         │
                     ╱   P > L   ╲──────────────┐                │
                     ╲           ╱              │                │
                      ╲─────────╱  #205         │     #206       │
                           │ Y                  ▼                │
              ┌────────────────────┐  ┌────────────────────┐    │
              │  FLAG OF PERSON    │  │  FLAG OF SCENERY   │    │
              │     SETTING        │  │     SETTING        │    │
              └──────────┬─────────┘  └─────────┬──────────┘    │
                         │                      │               │
                         ◄──────────────────────┴───────────────┘
                         │
                         ▼
                    ┌─────────────┐
                    │     End     │
                    └─────────────┘
```

FIG. 8 ( a )

FIG. 8 ( b )

FIG. 8 ( c )

# FIG. 9

```
                    Start

           ICC PROFILE READING          #301

            RGB → XYZ
            TRANSFORM                    #302

            XYZ → L*a*b
            TRANSFORM                    #303

           COUNT VALUE
           RESETTING                     #304

                                    #305
        FLESH COLOR AREA?           N

              Y

          FLESH COLOR
          COUNT VALUE + 1              #306

          COUNT VALUE + 1              #307

                                    #308
        ALL PIXELS CONCLUDED?        N

              Y                 #309
        FLESH COLOR RATE > TH        N

              Y        #310                    #311
       FLAG OF PERSON              FLAG OF PERSON
       SETTING                     RESETTING

                    End
```

# FIG. 10

```
              ( Start )
                  │
                  ▼
            ╱───────────╲        #401
          ╱   PARAMETER   ╲      ──── Y ─────────────────────────────────┐
         ╱  RECORDED BY DIGITAL CAMERA ╲                                  │
          ╲   EXISTING?  ╱                                                │
            ╲───────────╱                                                 │
                  │ N                                                     │
                  ▼                                                       │
            ╱───────────╲     #402                               #411    │
          ╱               ╲   ──── Y ─────────────┐      ┌──────────────────────┐
         ╱ SCENE-REFERRED IMAGE ? ╲                │      │     SETTING OF        │
          ╲               ╱                         │      │ PARAMETER RECORDED    │
            ╲───────────╱                           │      │  BY DIGITAL CAMERA    │
                  │ N                               │      └──────────────────────┘
                  │                         ╱──────────╲   #404              │
                  │                       ╱              ╲  ──── N ───┐       │
                  │                      ╱ Exif INFORMATION EXISTING ? ╲      │
                  │                       ╲              ╱              │      │
                  │                         ╲──────────╱               │      │
                  │                              │ Y        #410        │      │
                  │                              │      ┌──────────────────┐   │
                  │                              │      │ SETTING OF DEFAULT│   │
                  │                              │      │    PARAMETER      │   │
                  │                              ▼      └──────────────────┘   │
                  │                    ┌──────────────────┐                    │
                  │                    │  CALCULATION OF   │                    │
                  │                    │   ADAPTATION      │                    │
                  │                    │   LUMINANCE ·     │── #405             │
                  │                    │   BACKGROUND      │                    │
                  │                    │ RELATIVE LUMINANCE│                    │
                  │          #403      └──────────────────┘                    │
                  ▼                              │                             │
        ┌──────────────────┐          ┌──────────────────┐                    │
        │ DEFAULT PARAMETER│          │  CALCULATION OF   │                    │
        │     SETTING      │          │ COLORIMETRY VALUE │── #406             │
        └──────────────────┘          │ OF ADAPTATION WHITE│                   │
                  │                    └──────────────────┘                    │
                  │                              │                             │
                  │                    ┌──────────────────┐                    │
                  │                    │   CALCULATION     │                    │
                  │                    │  OF PERIPHERAL    │── #407             │
                  │                    │    CONTRAST       │                    │
                  │                    └──────────────────┘                    │
                  │                              │          #408               │
                  │                         ╱──────────╲                       │
                  │                       ╱              ╲  ──── N ───┐         │
                  │                      ╱ FLAG OF PERSON SETTING? ╲   │         │
                  │                       ╲              ╱          │   │         │
                  │                         ╲──────────╱            │   │         │
                  │                              │ Y                │   │         │
                  │                    ┌──────────────────┐         │   │         │
                  │                    │  CORRECTION OF    │         │   │         │
                  │                    │  PARAMETER FOR    │── #409  │   │         │
                  │                    │     PERSON        │         │   │         │
                  │                    └──────────────────┘         │   │         │
                  │                              │                  │   │         │
                  └──────────────────┬──────────┴──────────────────┴───┴─────────┘
                                     ▼
                                 ( End )
```

# FIG. 11

R, G, B

APPEARANCE PARAMETER
Xw, Yw, Zw
$L_A$
Yb
c, Nc, $F_{LL}$, F

#501

**RGB → XYZ TRANSFORM**

X, Y, Z

#502

**APPEARANCE PARAMETER TRANSFORM**

#503

**COLOR ADAPTATION TRANSFORM**

Rc, Gc, Bc

k, $F_L$, n, Nbb, Ncb, z

#504

**CONE RESPONSE TRANSFORM**

R', G', B'

#505

**NON-LINEAR RESPONSE TRANSFORM**

Ra', Ga', Ba'

#506

**CALCULATION OF COLOR APPEARANCE VALUE**

h, J, C

# FIG. 12

# FIG. 13

```
          ┌──────────┐
          │  Start   │
          └────┬─────┘
               │
               ▼
  ┌──────────────────────────┐
  │ CALCULATION OF COLORIMETRY│
  │ VALUE OF SIX PRIMARY COLORS│ ── #601
  │      ON INPUT SIDE         │
  └────────────┬──────────────┘
               │
               ▼
  ┌──────────────────────────┐
  │   CALCULATION OF CHROMA    │
  │ VALUE OF SIX PRIMARY COLORS│ ── #602
  │      ON INPUT SIDE         │
  └────────────┬──────────────┘
               │
               ▼
  ┌──────────────────────────┐
  │ CALCULATION OF COLORIMETRY │
  │ VALUE OF SIX PRIMARY COLORS│ ── #603
  │      ON OUTPUT SIDE        │
  └────────────┬──────────────┘
               │
               ▼
  ┌──────────────────────────┐
  │   CALCULATION OF CHROMA    │
  │ VALUE OF SIX PRIMARY COLORS│ ── #604
  │      ON OUTPUT SIDE        │
  └────────────┬──────────────┘
               │
               ▼
  ┌──────────────────────────┐
  │      CALCULATION OF        │
  │ Cout(i)/Cin(i) MINIMUM VALUE│ ── #605
  └────────────┬──────────────┘
               │
               ▼
  ┌──────────────────────────┐
  │    COUNT VALUE RESETTING   │ ── #606
  └────────────┬──────────────┘
               │
               ▼
  ┌──────────────────────────┐
  │    CHROMA COMPRESSION      │ ── #607
  └────────────┬──────────────┘
               │
               ▼          #608
         ◇─────────────────◇  N
         ALL PIXELS CONCLUDED? ──┐
         ◇─────────────────◇     │
               │ Y               │
               ▼                 │
          ┌──────────┐           │
          │   End    │           │
          └──────────┘           │
```

# FIG. 14

h, J', C'

↓ #702

**CALCULATION OF NON-LINEAR RESPONSE FROM COLOR APPEARANCE VALUE**

APPEARANCE PARAMETER

Xw', Yw', Zw'
LA'
Yb'
c', Nc', FLL', F'

↓

Ra', Ga', Ba'

↓ #703

**NON-LINEAR RESPONSE INVERSE TRANSFORM**

↓ #701

**APPEARANCE PARAMETER TRANSFORM**

↓

R', G', B'

↓ #704

**CONE RESPONSE INVERSE TRANSFORM**

k', FL', n', Nbb', Ncb', z'

↓

Rc, Gc, Bc

↓ #705

**COLOR ADAPTATION INVERSE TRANSFORM**

↓

X", Y", Z"

↓ #706

**X"Y"Z" → RGB TRANSFORM**

↓

R, G, B

## FIG. 15

# FIG. 16

# FIG. 17

# FIG. 18

CAM97s - a

DATA SHOWN WITH "●" IS "Nc + 0.2"

# FIG. 19

CIEAM97s - b

CIECAM97s - a

DATA SHOWN WITH "●" IS "La X 4"

# FIG. 20

EP 1 558 022 A2

# FIG. 21

| APPEARANCE PARAMETER | c | Nc | FLL | F |
|---|---|---|---|---|
| AVERAGE PERIPHERAL AREA, SAMPLE VIEW ANGLE OF NOT LESS THAN 4° | 0.69 | 1.0 | 0 | 1.0 |
| AVERAGE PERIPHERAL AREA | 0.69 | 1.0 | 1.0 | 1.0 |
| DUSKY PERIPHERAL AREA | 0.59 | 1.1 | 1.0 | 0.9 |
| DARK PERIPHERAL AREA | 0.525 | 0.8 | 1.0 | 0.9 |
| SLIDE FILM ON LIGHT BOX | 0.41 | 0.8 | 1.0 | 0.9 |